(19) Europäisches Patentamt
European Patent Office
Office européen des brevets

(11) Veröffentlichungsnummer: **0 309 957 B1**

(12) # EUROPÄISCHE PATENTSCHRIFT

(45) Veröffentlichungstag der Patentschrift: **27.05.92**

(51) Int. Cl.[5]: **G03C 7/26**, //C07C69/732

(21) Anmeldenummer: **88115785.3**

(22) Anmeldetag: **26.09.88**

(54) **Stabilisatoren für farbphotographische Aufzeichnungsmaterialien.**

(30) Priorität: **28.09.87 CH 3751/87**

(43) Veröffentlichungstag der Anmeldung:
**05.04.89 Patentblatt 89/14**

(45) Bekanntmachung des Hinweises auf die Patenterteilung:
**27.05.92 Patentblatt 92/22**

(84) Benannte Vertragsstaaten:
**BE DE FR GB IT NL**

(56) Entgegenhaltungen:
**EP-A- 0 098 241**
**EP-A- 0 106 799**
**EP-A- 0 216 598**

**RESEARCH DISCLOSURE, Nr. 272, Dezember 1986, Seiten 733-734, Ref.Nr. 27248, Havant, GB; "Photosensitive colour photographic material having low stain and high maximum density"**

(73) Patentinhaber: **CIBA-GEIGY AG**
**Klybeckstrasse 141**
**CH-4002 Basel(CH)**

(72) Erfinder: **Leppard, David G.**
**Route de Bourguillon 6**
**CH-1723 Marly(CH)**

(74) Vertreter: **Zumstein, Fritz, Dr. et al**
**Bräuhausstrasse 4**
**W-8000 München 2(DE)**

EP 0 309 957 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft die Lichtstabilisierung von farbphotographischen Aufzeichnungsmaterialien, welche mindestens einen Blaugrün(Cyan-)-, Purpur(Magenta-)- oder Gelbkuppler enthalten, durch Zusatz eines Stabilisators in die photographische Schicht.

Es ist bekannt, alkylsubstituierte Phenole als Stabilisatoren zu verwenden. So wurde beispielsweise in der EP-A-0 106 799 eine grosse Anzahl alkylsubstituierter Phenole beschrieben, die als Antioxidantien in Polymeren und Oelen wirken. Es wurde dabei erwähnt, dass die Stabilisatoren auch in photographischen Systemen Verwendung finden können. Es ist jedoch kein Hinweis darauf enthalten, dass diese Phenole photographische Farbstoffe wirksam zu schützen vermögen.

Es ist weiterhin bekannt, Dihydroxyphenylderivate in photographischen Systemen als Stabilisatoren bzw. Kuppler zu verwenden, siehe beispielsweise die EP-A-069 068, EP-A-069 06 und EP-A-098 241. In der EP-A-098 241 sind beispielsweise funktionell alkylierte Hydrochinonäther als wirksame Stabilisatoren für photographische Farbstoffe beschrieben.

Es besteht jedoch weiterhin Interesse an Verbesserungen der Lichtechtheit der photographischen Farbstoffe.

Es wurde nun gefunden, dass eine spezifische Gruppe von Phenolen und Phenolderivaten in einer Farbschicht von photographischen Aufzeichnungsmaterialien unerwartet gute Stabilisatorwirkung zeigt.

Gegenstand der vorliegenden Erfindung ist daher ein farbphotographisches Aufzeichnungsmaterial, das mindestens einen Blaugrün-, Purpur- oder Gelbkuppler sowie einen phenolischen Stabilisator enthält, dadurch gekennzeichnet, dass es als Stabilisator 20-1000 mg/$m^2$ mindestens einer Verbindung der Formel I oder II

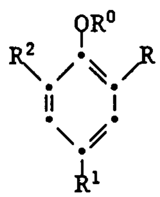
(I)

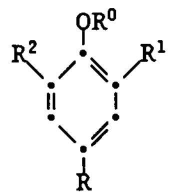
(II)

enthält,
worin R eine Gruppe der Formel III oder IV

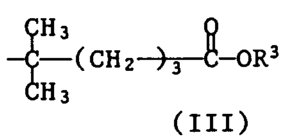
(III)

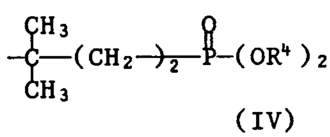
(IV)

bedeutet,

$R^1$ Wasserstoff, $C_1$-$C_8$-Alkyl, Cyclohexyl, Phenyl-$C_1$-$C_4$-Alkyl oder eine Gruppe der Formel III oder IV ist, und

$R^2$ eine für $R^1$ genannte Bedeutung hat, unter der Bedingung, dass in der Formel II $R^1$ und $R^2$ nicht gleichzeitig Wasserstoff bedeuten können, oder $R^2$ eine Gruppe der Formel

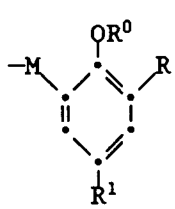
oder
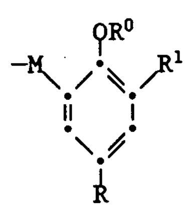

bedeutet, wobei M für eine direkte Bindung, $-CH_2-$ oder -S- steht,

$R^3$ eine Gruppe der Formel V oder VI

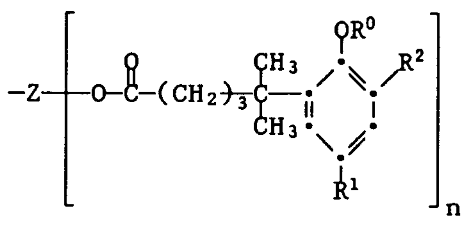

(V)

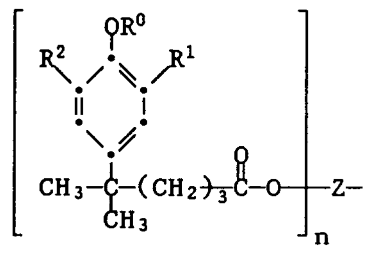

(VI)

bedeutet, wobei n eine Zahl 1 bis 3 ist und Z ein $C_2$-$C_{18}$-Alkylrest ist, welcher 2 bis 4 Valenzen hat und gegebenenfalls durch ein oder mehrere O- und/oder S-Atome unterbrochen ist,

$R^4$ $C_1$-$C_{12}$-Alkyl bedeutet,

$R^0$ -CO-$R^5$, -$SO_2$-$R^6$, -COO$R^3$, -CO-COO$R^3$, -Si($R^7$)($R^8$)($R^9$) oder eine Gruppe der Formel VII, VIII oder IX

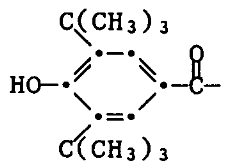

,

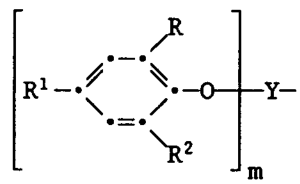

oder

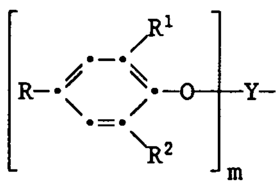

(VII) (VIII) (IX)

bedeutet, oder $R^0$ Wasserstoff ist, wenn n in den Formeln (V) und (VI) 3 ist, wobei m die Zahl 1 oder 2 ist, und

Y bei m = 1 $-Si(R^7)(R^8)$ und

bei m = 2 $>P-$ bedeutet,

$R^5$ für $C_1$-$C_{20}$-Alkyl, $C_2$-$C_{18}$-Alkenyl, $C_5$-$C_{12}$-Cycloalkyl, ein gegebenenfalls mit ein oder zwei Alkylgruppen substituiertes Phenyl oder Naphthyl steht, oder Phenyl-$C_1$-$C_4$-Alkyl ist,

$R^6$ für $C_1$-$C_4$-Alkyl, Phenyl oder Tolyl steht, und

$R^7$, $R^8$ und $R^9$ unabhängig voneinander $C_1$-$C_4$-Alkyl, Phenyl oder Benzyl sind.

$R^1$ und $R^2$ als $C_1$-$C_8$-Alkyl bedeuten beispielsweise Methyl, Ethyl, n-Propyl, Isopropyl, n-Butyl, sek-Butyl, t-Butyl, n-Pentyl, t-Amyl, n-Octyl oder 1,1,3,3-Tetramethylbutyl.

$R^4$ als $C_1$-$C_{12}$-Alkyl kann zusätzlich zu den Bedeutungen von $R^1$ und $R^2$ beispielsweise n-Nonyl, n-Decyl, 2,7-Dimethyloctyl oder n-Dodecyl sein.

$R^5$ als $C_1$-$C_{20}$-Alkyl bedeutet beispielsweise Methyl, Ethyl, n-Propyl, Isopropyl, n-Butyl, sek-Butyl, n-Pentyl, n-Hexyl, n-Heptyl, n-Octyl, 2-Ethylhexyl, n-Nonyl, n-Decyl, n-Dodecyl, n-Tetradecyl, n-Hexadecyl, n-Octadecyl oder n-Eicosyl.

$R^4$, $R^6$, $R^7$, $R^8$ und $R^9$ als $C_1$-$C_4$-Alkyl bedeuten beispielsweise Methyl, Ethyl, n-Propyl, Isopropyl, n-Butyl, sek-Butyl oder t-Butyl.

$R^5$ als $C_2$-$C_{18}$-Alkenyl bedeutet beispielsweise Vinyl, Allyl, n-But-2-enyl, 2-Methylprop-2-enyl, n-Pent-2-enyl, n-Hex-2-enyl, n-Hexa-2,4-dienyl, n-Dec-9-enyl oder n-Octadec-17-enyl.

$R^5$ als $C_5$-$C_{12}$-Cycloalkyl bedeutet beispielsweise Cyclopentyl, Cyclohexyl, Cyclooctyl, Cyclodecyl, Adamantyl oder Cyclododecyl.

Als ein- oder zweifach $C_1$-$C_4$-alkyl-substituiertes Phenyl oder Naphthyl ist $R^5$ beispielsweise Tolyl,

Xylyl, Cumyl, Butylphenyl oder 2-Methylnaphthyl.

Als Phenyl-$C_1$-$C_4$-Alkyl sind $R^1$, $R^2$ und $R^5$ beispielsweise Benzyl, Phenylethyl, Benzylhydryl, $\alpha$-Methylbenzyl oder $\alpha$,$\alpha$-Dimethylbenzyl.

Bevorzugt sind Zusammensetzungen, worin $R^0$ -CO-$R^5$, -CO-COO$R^3$, -Si($R^7$)($R^8$)($R^9$) oder eine Gruppe der Formel VII, VIII oder IX ist. $R^3$, $R^7$, $R^8$ und $R^9$ haben die zuvor genannte Bedeutung.

Ganz besonders bevorzugt sind Zusammensetzungen, worin $R^0$ eine Gruppe der Formel VII

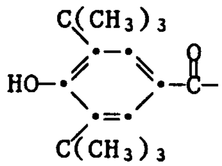

(VII)

bedeutet.

Die folgenden Beispiele für Verbindungen der Formel I oder II in den erfindungsgemässen Zusammensetzungen illustrieren die Erfindung:

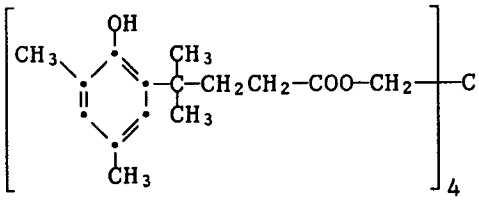

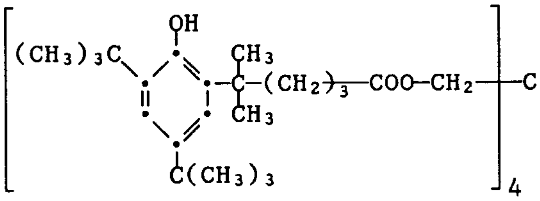

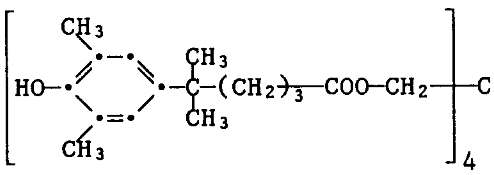

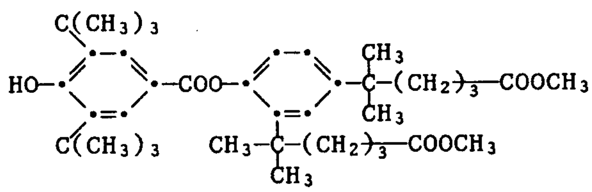

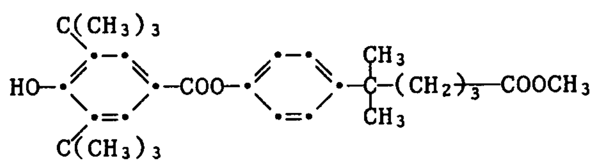

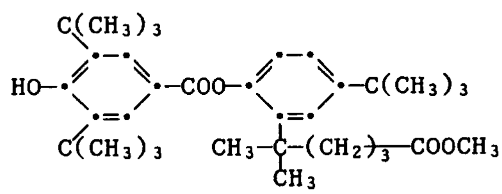

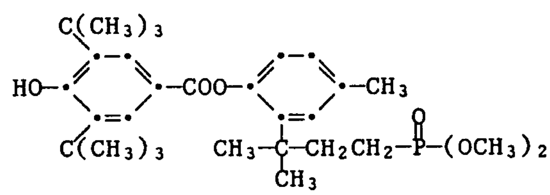

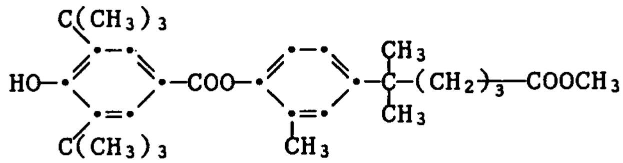

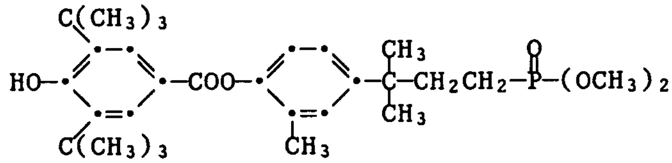

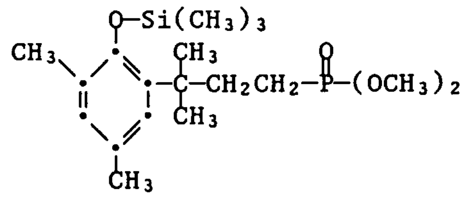

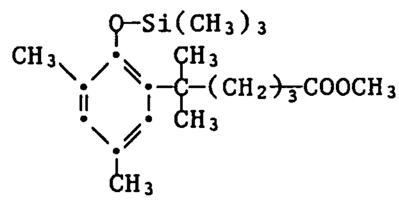

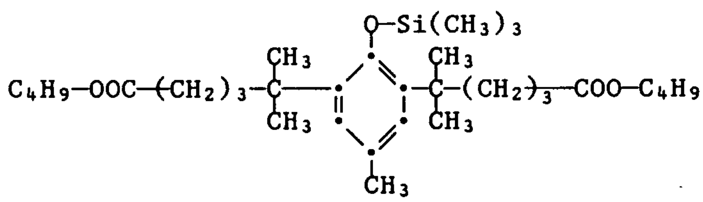

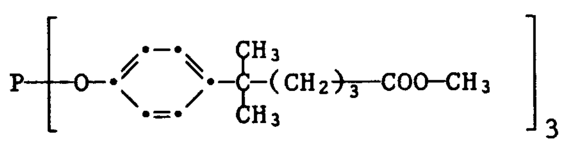

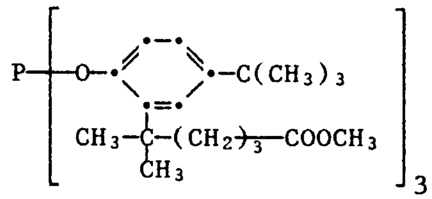

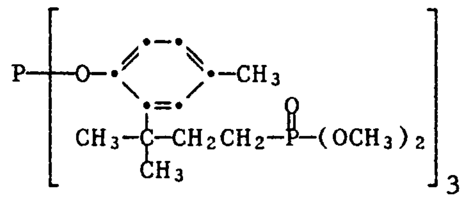

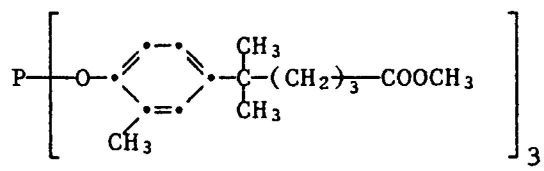

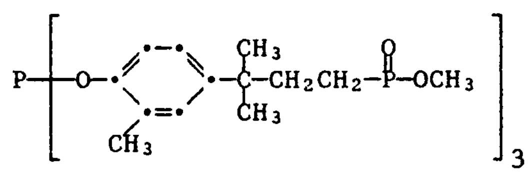

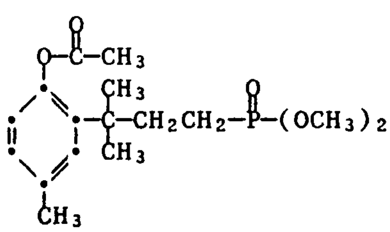

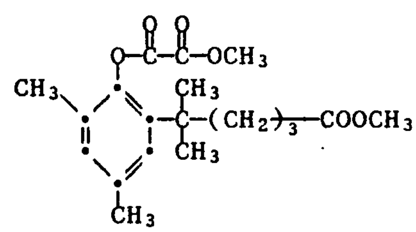

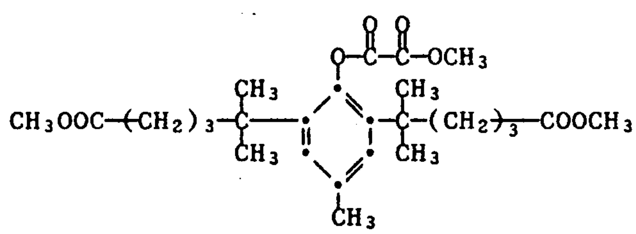

Die Verbindungen der Formel I und II in den erfindungsgemässen Zusammensetzungen sind zum Teil neu und daher ebenfalls Gegenstand der Erfindung.

Die Erfindung betrifft daher Verbindungen der Formel Ia oder IIa

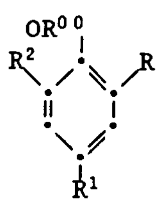

(Ia)

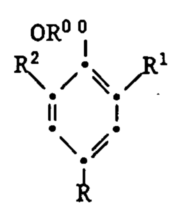

(IIa) ,

worin $R^{00}$ Wasserstoff, $-CO-R^5$, $-SO_2-R^6$, $-COOR^3$, $-CO-COOR^3$, $-Si(R^7)(R^8)(R^9)$ oder eine Gruppe der Formel VII, VIII oder IX

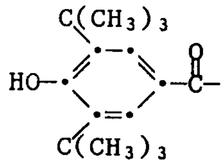

, 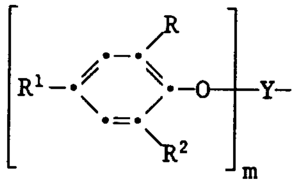 oder 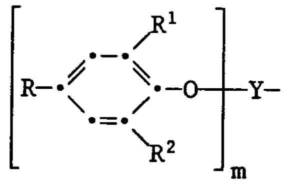

(VII) (VIII) (IX)

bedeutet, wobei m die Zahl 1 oder 2 ist, und

Y bei m = 1 $>Si(R^7)(R^8)$ und

bei m = 2 $>P-$ bedeutet,

wobei jedoch für den Fall $R^{00}$ = H R für eine Gruppe der Formel

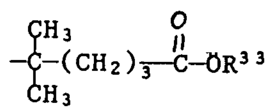

steht, worin $R^{33}$ eine Gruppe der Formeln Va oder VIa

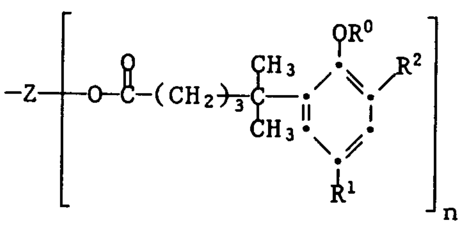

(Va)

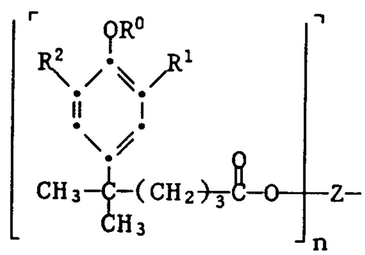

(VIa)

ist, worin n die Zahl 3 ist, Z die Gruppe

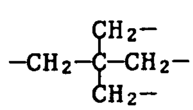

bedeutet,
und $R^0$, Wasserstoff, $-CO-R^5$, $-SO_2-R^6$, $-COOR^3$, $-CO-COOR^3$, $-Si(R^7)(R^8)(R^9)$ oder eine Gruppe der Formel VII, VIII oder IX

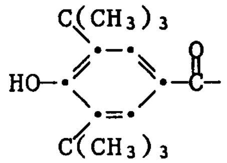 , 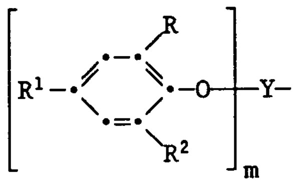 oder 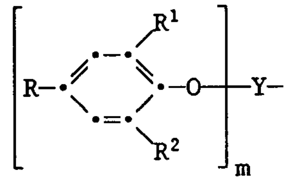

(VII) (VIII) (IX)

bedeutet, wobei m die Zahl 1 oder 2 ist, und

Y bei m = 1 $>Si(R^7)(R^8)$ und

bei m = 2 $>P-$ bedeutet,

R eine Gruppe der Formel III oder IV

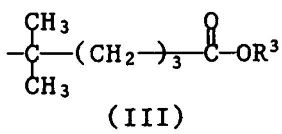

(III)

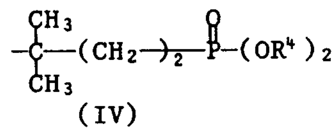

(IV)

bedeutet,

$R^1$ Wasserstoff, $C_1$-$C_8$-Alkyl, Cyclohexyl, Phenyl-$C_1$-$C_4$-Alkyl oder eine Gruppe der Formel III oder IV ist, und

$R^2$ eine für $R^1$ genannte Bedeutung hat, unter der Bedingung, dass in der Formel II $R^1$ und $R^2$ nicht gleichzeitig Wasserstoff bedeuten können, oder $R^2$ eine Gruppe der Formel

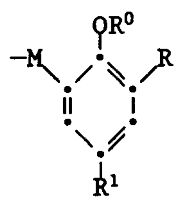 oder 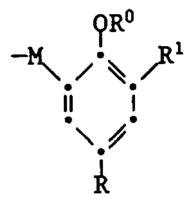

bedeutet, wobei M für eine direkte Bindung, $-CH_2-$ oder -S- steht,

$R^3$ $C_1$-$C_{20}$-Alkyl, das gegebenenfalls durch -OH, $-OCOR^5$ oder $-OR^5$ substituiert ist und/oder das gegebenenfalls durch ein oder mehrere O-Atome unterbrochen ist, $C_2$-$C_{18}$-Alkenyl, $C_5$-$C_{12}$-Cycloalkyl, ein gegebenenfalls mit ein oder zwei Alkylgruppen substituiertes Phenyl oder Naphthyl bedeutet, oder Phenyl-$C_1$-$C_4$-Alkyl, ein Rest $\otimes$- oder $\otimes$-$CH_2$-, worin $\otimes$- für einen 5- oder 6-gliedrigen O-haltigen Heterozyklus steht, der gegebenenfalls mit ein oder zwei $C_1$-$C_4$-Alkylgruppen substituiert ist, oder eine Gruppe der Formel V oder VI

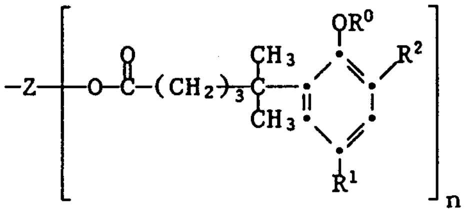

(V)

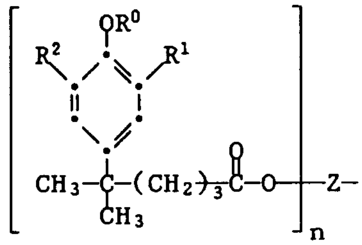

(VI)

bedeutet, wobei n eine Zahl 1 bis 3 ist und Z ein $C_2$-$C_{18}$-Alkylrest ist, welcher 2 bis 4 Valenzen hat und gegebenenfalls durch ein oder mehrere O- und/oder S-Atome unterbrochen ist,

$R^4$ $C_1$-$C_{12}$-Alkyl bedeutet,

$R^5$ für $C_1$-$C_{20}$-Alkyl, $C_2$-$C_{18}$-Alkenyl, $C_5$-$C_{12}$-Cycloalkyl, ein gegebenenfalls mit ein oder zwei Alkylgruppen substituiertes Phenyl oder Naphthyl steht, oder Phenyl-$C_1$-$C_4$-Alkyl ist,

$R^6$ für $C_1$-$C_4$-Alkyl, Phenyl oder Tolyl steht, und

$R^7$, $R^8$ und $R^9$ unabhängig voneinander $C_1$-$C_4$-Alkyl, Phenyl oder Benzyl sind.

Die bereits zuvor unter den Formeln I und II gegebenen beispielhaften und bevorzugten Bedeutungsmöglichkeiten für R, $R^1$, $R^2$, $R^3$ und $R^0$ gelten hier auch. Ebenso gelten die für $R°$ gemachten Angaben sinngemäss auch für $R^{00}$ in den Formeln Ia und IIa.

Bevorzugt sind Verbindungen der Formel Ia oder IIa worin $R^{00}$ -CO-$R^5$, -CO-COO$R^3$, -Si($R^7$)($R^8$)($R^9$) oder eine Gruppe der Formel VII, VIII oder IX bedeutet, und $R^3$, $R^4$, $R^7$, $R^8$ und $R^9$ die zuvor genannte Bedeutung haben.

Ganz besonders bevorzugt sind die Verbindungen der Formel Ia oder IIa, worin $R^{00}$ die Gruppe der Formel VII

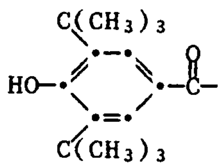

(VII)

bedeutet.

Die Herstellung der bekannten und neuen Verbindungen der Formeln I, Ia, II und IIa erfolgt nach an sich bekannten Methoden, wie sie beispielsweise in der EP-A-0 106 799 beschrieben sind.

Die neuen Verbindungen der Formel Ia bzw. IIa, worin $R^{00}$ von Wasserstoff verschieden ist, können beispielsweise durch Umsetzung eines Phenols der Formeln

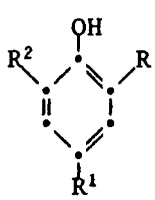

oder

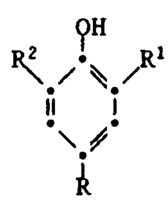

mit Verbindungen der Formel $R^{00}$-Hal,
worin $R^{00}$, R, $R^1$ und $R^2$ die zuvor genannte Bedeutung haben und Hal ein Halogenatom, vorzugsweise ein Chloratom ist, unter Stickstoff-Atmosphäre, gegebenenfalls in Gegenwart eines Katalysators hergestellt werden.

Die Ausgangsverbindungen sind bekannte Verbindungen und können nach bekannten Methoden hergestellt werden. Sie sind zum Teil auch im Handel erhältlich.

Je nach ihrer Konstitution können die erfindungsgemässen Stabilisatoren fest-kristallin, wachsartig,

sirupös oder flüssig sein. Zum Teil sind sie in photographischen Lösungsmittel leich löslich.

Bevorzugt sind Zusammensetzungen der Erfindung, welche flüssig oder in photographischen Lösungsmittel leicht lösliche Verbindungen der Formel I oder II enthalten. Besonders bevorzugt sind diejenige, welche flüssige Verbindungen der Formel I oder II enthalten.

Bevorzugt weisen die erfindungsgemässen Zusammensetzungen einen Gehalt von 20-800 $mg/m^2$, insbesondere von 50-300 $mg/m^2$, an Verbindungen der Formel I oder II auf.

Die die erfindungsgemässen Stabilisatoren werden vorzugsweise in einem organischen Lösungsmittel bzw. Lösungsmittelgemisch gelöst und die Lösung in einer Gelatinelösung emulgiert, die dann zur photographischen Gelatineschicht bei deren Bereitung als Dispersion oder Emulsion zugesetzt wird. Als Lösungsmittel verwendet man bevorzugt ein Gemisch eines niedrig-siedenden und eines hoch-siedenden Lösungsmittels und entfernt das niedrig-siedende Lösungsmittel während der Emulgierung. Beispiele für verwendbare niedrig-siedende Lösungsmittel sind Methylacetat, Ethylacetat, Tetrachlormethan, Dichlormethan, Trichlormethan, Methanol, Ethanol, Dioxan, Aceton oder Benzol. Beispiele für hoch-siedende Lösungsmittel sind Dimethylformamid, Dimethylsulfoxid, Dialkylphthalate oder Triarylphosphate.

Die Menge von hochsiedendem Lösungsmittel liegt zweckmässig im Bereich von 0,1 bis 300 %, vorzugsweise 10 bis 100 %, bezogen auf den Farbkuppler.

Das Dispergieren der Stabilisatorlösung in der Gelatinelösung kann z.B. in einer Kolloidmühle oder in einem Homogenisator oder mit Hilfe von Ultraschall geschehen. Hierbei können auch oberflächenaktive Mittel (Emulgatoren) zugesetzt werden. Eine feine Dispergierung ist Voraussetzung für die homogene Verteilung der Stabilisatoren in der photographischen Schicht.

Sofern die erfindungsgemässen Stabilisatoren flüssig sind, können sie selbst als photographische Lösungsmittel fungieren. Sie können direkt dispergiert werden. Voraussetzung ist dabei, dass die Stabilisatoren so frei-fliessend sind, dass sie Eigenschaften bekannter photographischer Lösungsmittel, wie beispielsweise von Di-n-butylphthalat oder Tricresolphosphat, aufweisen.

Der Zusatz der Stabilisatoren der Formeln I und II sowie der erfindungsgemässen neuen Stabilisatoren kann zu einer oder zwei oder allen drei farbempfindlichen Schichten erfolgen. Von besonderer Bedeutung ist der Zusatz zur Gelbschicht. In den Schichten befindet sich das sensibilisierte Silberhalogenid und der jeweilige Farbkuppler. Ausserdem können die Schichten weitere Stabilisatoren und/oder sonstige Zusätze enthalten.

Die Gelbkuppler sind vorzugsweise Verbindungen der Formel A

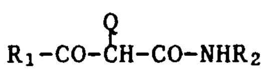

(A),

worin $R_1$ Alkyl oder Aryl ist, $R_2$ Aryl ist und Q Wasserstoff oder eine Gruppe ist, die durch Reaktion mit dem oxidierten Entwickler abgespalten werden kann.

Eine Gruppe von Gelbkupplern sind solche Verbindungen der Formel A, in denen $R_1$ t-Butyl ist und $R_2$ eine Gruppe der Formel

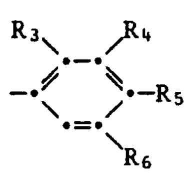

ist, worin $R_3$ Wasserstoff, Halogen, Alkyl oder Alkoxy bedeutet und $R_4$, $R_5$ und $R_6$ Wasserstoff, Halogen, Alkyl, Alkenyl, Alkoxy, Aryl, Carboxy, Alkoxycarbonyl, eine Carbamylgruppe, eine Sulfon- oder Sulfamylgruppe, eine Alkylsulfonamidogruppe, Acylaminogruppe, Ureidogruppe oder Aminogruppe bedeuten.

Vorzugsweise sind $R_3$ Chlor, $R_4$ und $R_5$ Wasserstoff und $R_6$ eine Acylaminogruppe. Hierzu gehören auch die Verbindungen der Formel

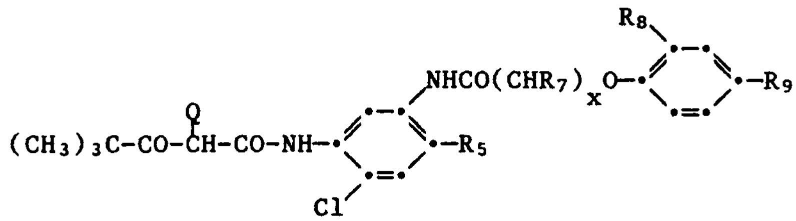

worin x 0-4 ist, $R_7$ Wasserstoff oder Alkyl bedeutet, und $R_8$ und $R_9$ Alkyl sind.

Eine andere Gruppe von Gelbkupplern entspricht der Formel B

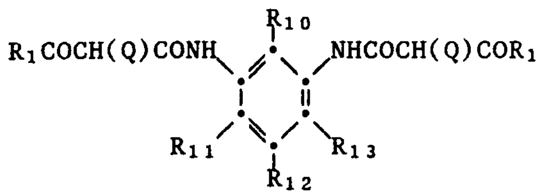 (B),

worin $R_{10}$ Wasserstoff, Halogen oder Alkoxy ist,

$R_{11}$, $R_{12}$ und $R_{13}$ Wasserstoff, Halogen, Alkyl, Alkenyl, Alkoxy, Aryl, Carboxyl, Alkoxycarbonyl, eine Carbamylgruppe, eine Sulfongruppe, Sulfamylgruppe, Sulfonamidogruppe, Acylaminogruppe, Ureidogruppe oder Aminogruppe bedeuten und $R_1$ und Q die oben angegebene Bedeutung haben.

Dazu gehören Verbindungen der Formel B, in denen $R_1$ t-Butyl ist, $R_{10}$ Chlor ist, $R_{11}$ und $R_{13}$ Wasserstoff sind und $R_{12}$ Alkoxycarbonyl ist.

In den Verbindungen der Formel A und B kann die Abgangsgruppe Q Wasserstoff, Halogen z.B. Cl, oder eine Gruppe $-OR_{15}$ sein, worin $R_{15}$ Alkyl, Aryl, Acyl oder ein heterocyclischer Rest ist, oder Q ist eine heterocyclische Gruppe

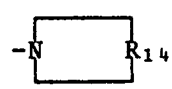

worin $R_{14}$ eine organische zweiwertige Gruppe ist, die den Ring zu einem 4-7-gliedrigen Ring ergänzt.

Typische Beispiele für gebräuchliche Gelbkuppler sind die Verbindungen der folgenden Formeln:

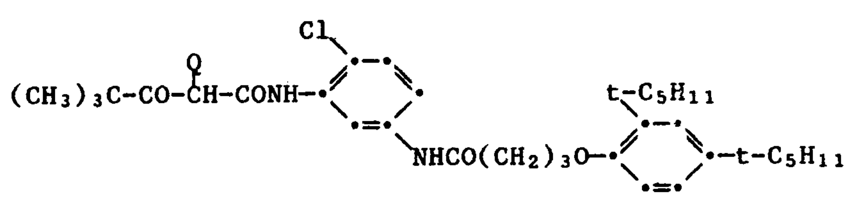

a) Q = 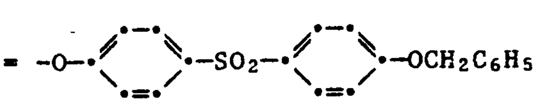

b) Q = 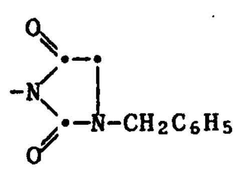

c) Q = 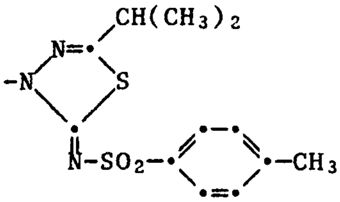

d) Q = 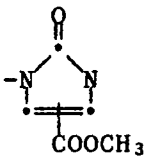

e) Q = 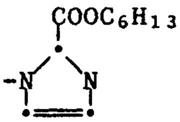

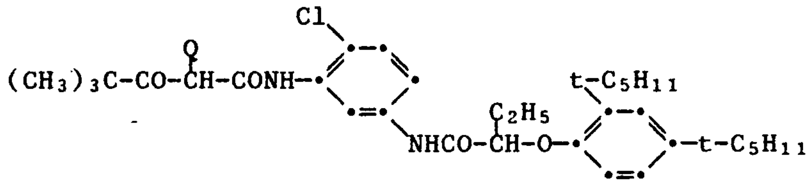

f) Q = 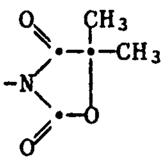

g) Q = 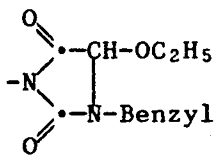

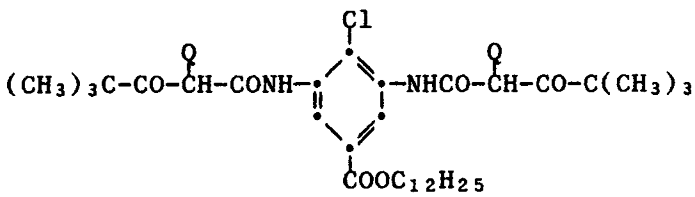

h) Q = 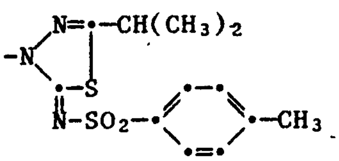

Weitere Beispiele für Gelbkuppler sind zu finden in den US-A 2,407,210, 2,778,658, 2,875,057, 2,908,513, 2,908,573, 3,227,155, 3,227,550, 2,253,924, 3,265,506, 3,227,155, 3,408,194, 3,341,331, 3,369,895, 3,384,657, 3,415,652, 3,447,928, 3,551,155, 3,582,322, 3,725,072, 3,891,445, 3,933,501,4,115,121, 4,401,752, 4,022,620, in den DE-A 1,547,868, 2,057,941, 2,162,899, 2,163,813, 2,213,461, 2,219,917, 2,261,361, 2,261,362, 2,263,875, 2,329,587, 2,414,006, 2,422,812 und in den GB-A 1,425,020 und 1,077,874.

Die Gelbkuppler werden üblicherweise in einer Menge von 0,05-2 Mol und vorzugsweise 0,1-1 Mol pro Mol Silberhalogenid verwendet.

Magentakuppler können z.B. einfache 1-Aryl-5-pyrazolone sein oder mit 5-gliederigen Heteroringen kondensierte Pyrazolderivate wie z.B. Imidazopyrazole, Pyrazolopyrazole, Pyrazolotriazole oder Pyrazolotetrazole.

Eine Gruppe von Magentakupplern sind 5-Pyrazolone der Formel C,

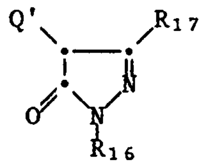

(C),

wie sie in der Britischen Patentschrift 2,003,473 beschrieben sind. Darin ist $R_{16}$ Wasserstoff, Alkyl, Aryl, Alkenyl oder eine heterocyclische Gruppe. $R_{17}$ ist Wasserstoff, Alkyl, Aryl, eine heterocyclishe Gruppe, eine Estergruppe, Alkoxygruppe, Alkylthiogruppe Carboxygruppe, Arylaminogruppe, Acylaminogruppe, (Thio)-harnstoffgruppe, (Thio)-carbamoylgruppe, Guanidinogruppe oder Sulfonamidogruppe.

Bevorzugt ist $R_{17}$ eine Gruppe

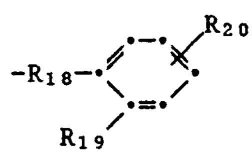

,

worin $R_{18}$ Imino, Acylamino oder Ureido ist, $R_{19}$ Wasserstoff, Halogen, Alkyl oder Alkoxy ist, $R_{20}$ Wasserstoff, Alkyl, Acylamino, Carbamoyl, Sulfamoyl, Sulfonamido, Alkoxycarbonyl, Acyloxy oder eine Urethangruppe ist.

Wenn Q′ Wasserstoff ist, so ist der Magentakuppler tetraäquivalent in bezug auf das Silberhalogenid.

Typische Beispiele für diesen Typ von Magentakupplern sind Verbindungen der Formel

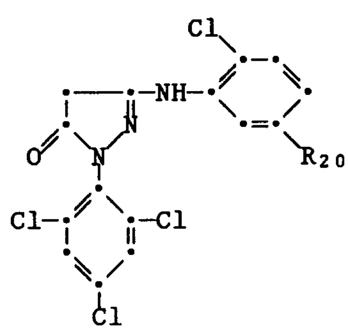

worin $R_{20}$ die oben genannten Bedeutungen hat.

Weitere Beispiele solcher tetraäquivalenter Magentakuppler sind zu finden in den USA 2,983,608, 3,061,432, 3,062,653, 3,127,269, 3,152,896, 3,311,476, 3,419,391, 3,519,429, 3,558,319, 3,582,322, 3,615,506, 3,684,514, 3,834,908, 3,888,680, 3,891,445, 3,907,571, 3,928,044, 3,930,861, 3,930,866, 3,933,500.

Wenn Q' in Formel C nicht Wasserstoff ist sondern eine Gruppe, die bei der Reaktion mit dem oxidierten Entwickler eliminert wird, so handelt es sich um einen diäquivalenten Magentakuppler. Q kann in diesem Fall z.B. Halogen oder eine über O, S oder N an den Pyrazolring gebundene Gruppe sein. Solche diäquivalente Kuppler ergeben eine höhere Farbdichte und sind reaktiver gegenüber dem oxidierten Entwickler als die entsprechenden tetraäquivalenten Magentakuppler.

Beispiele für diäquivalente Magentakuppler sind beschrieben in den US-A 3,006,579, 3,419,391, 3,311,476, 3,432,521, 3,214,437, 4,032,346, 3,701,783, 4,351,897, 3,227,554, in den EP-A-133,503, DE-A-2,944,601, JP-A-78/34044, 74/53435, 74/53436, 75/53372 und 75/122935.

Ueber ein zweiwertiges Q' können 2 Pyrazolonringe verknüpft werden und man erhält dann sogenannte Bis-Kuppler. Solche sind z.B. beschrieben in den US-A-2,632,702, US-A-2,618,864, GB-A-968,461, GB-A-786,859, JP-A-76/37646, 59/4086, 69/16110, 69/26589, 74/37854 und 74/29638.

Wie vorstehend erwähnt können als Magentakuppler auch mit 5-gliedrigen Heterocyclen kondensierte Pyrazole - sogenannte Pyrazoloazole-verwendet werden. Deren Vorteile gegenüber einfachen Pyrazolen ist, dass sie Farben von grösserer Formalin-Beständigkeit und reineren Absorptionsspektren aufweisen.

Man kann sie durch die allgemeinen Formeln $D_1$ und $D_2$ darstellen,

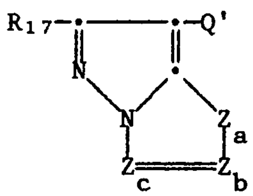 $(D_1)$ 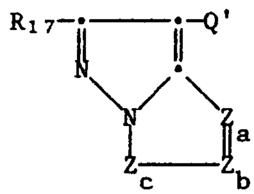 $(D_2)$ ,

worin $Z_s$, $Z_b$ und $Z_c$ die Ergänzungen zu einem 5-gliedrigen Ring bedeuten, der bis zu 4 Stickstoffatome enthalten kann. Die Verbindungen können demgemäss Pyrazolo-imidazole, Pyrazolo-pyrazole, Pyrazolo-triazole oder Pyrazolo-tetrazole sein. $R_{17}$ und $Q'$ haben dieselben Bedeutungen wie in Formel C.

Pyrazolo-tetrazole sind beschrieben in der JP-A-85/33552; Pyrazolo-pyrazole in der JP-A-85/43,695; Pyrazolo-imidazole in den JP-A-85/35732, JP-A-86/19949 und US-A-4,500,630; Pyrazolo-triazole in den JP-A-85/186,567, JP-A-86/47957, JP-A-85/215,687, JP-A-85/197,688, JP-A-85/172,982, EP-A-119,860, EP-A-173,256, EP-A-178,789, EP-A-178,788 und in Research Disclosure 84/24,624.

Weitere Pyrazoloazol-Magentakuppler sind beschrieben in: JP-A-86/28,947, JP-A-85/140,241, JP-A-85/262,160, JP-A-85/213,937, EP-A-177,765, EP-A-176,804, EP-A-170,164, EP-A-164,130, EP-A-178,794, DE-A-3,516,996, DE-A-3,508,766 und Research Disclosure 81/20919, 84/24531 und 85/25758.

Cyankuppler können z.B. Derivate von Phenol, von 1-Naphthol oder von Pyrazolochinazolon sein. Bevorzugt sind Strukturen der Formel E,

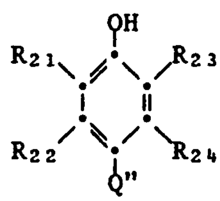 (E),

worin $R_{21}$, $R_{22}$, $R_{23}$ und $R_{24}$ Wasserstoff, Halogen, Alkyl, Carbamoyl, Amido, Sulfonamido, Phosphoramido oder Ureido sind. $R^{21}$ ist vorzugsweise H oder Cl, $R_{22}$ ist vorzugsweise eine Alkyl- oder Amidogruppe. $R_{23}$ ist vorzugsweise eine Aminogruppe und $R_{24}$ ist vorzugsweise Wasserstoff. $Q''$ ist Wasserstoff oder eine Abgangsgruppe, die bei der Reaktion mit dem oxidierten Entwickler abgespalten wird. Eine ausführliche Aufzählung von Cyankupplern ist im US-A-4,456,681 zu finden.

Beispiele von gebräuchlichen Cyankupplern sind die folgenden:

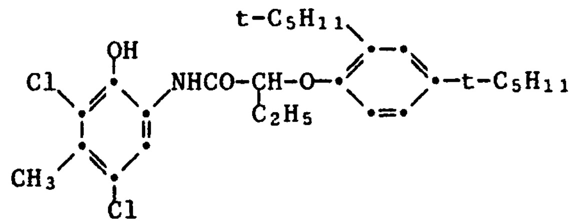

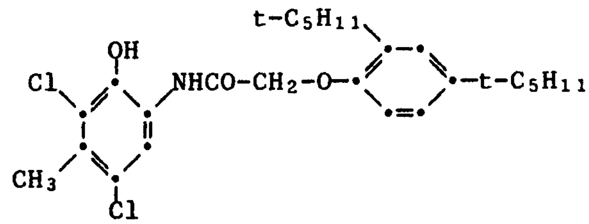

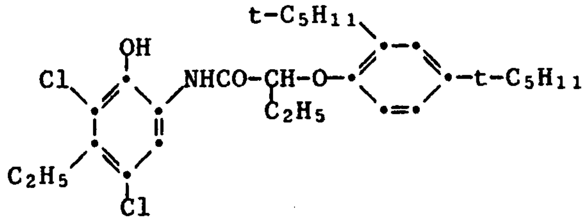

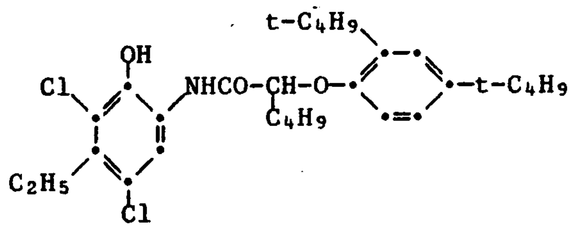

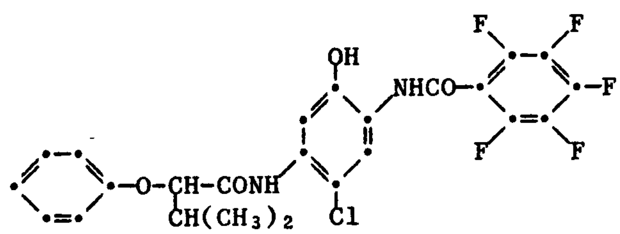

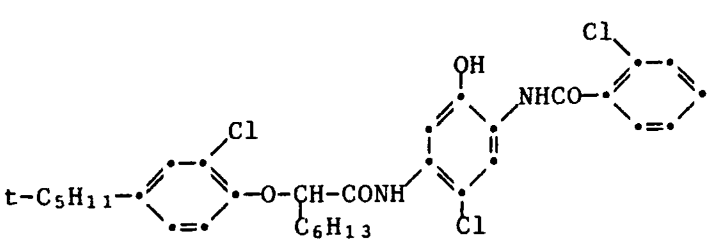

Weitere Beispiele von Cyankupplern sind in folgenden US-A zu finden: 2,369,929, 2,423,730, 2,434,272, 2,474,293, 2,521,908, 2,698,794, 2,706,684, 2,772,162, 2,801,171, 2,895,826, 2,908,573, 3,034,892, 3,046,129, 3,227,550, 2,253,294, 3,311,476, 3,386,301, 3,419,390, 3,458,315, 3,476,560, 3,476,563, 3,516,831, 3,560,212, 3,582,322, 3,583,971, 3,591,383, 3,619,196, 3,632,347, 3,652,286, 3,737,326, 3,758,308, 3,839,044, 3,880,661, 4,004,929, 4,124,396, 4,333,999, 4,463,086, 4,456,681.

Die für farbfotographische Materialien üblicherweise verwendeten Farbentwickler sind p-Dialkylaminoaniline. Beispiele hierfür sind 4-Amino-N,N-diethylanilin, 3-Methyl-4-amino-N,N-diethylanilin, 4-Amino-N-

ethyl-N-α-hydroxyethylanilin, 3-Methyl-4-amino-N-ethyl-N-α-hydroxyethylanilin, 3-Methyl-4-amino-N-ethyl-N-α-methansulphonamidoethylanilin, 3-Methyl-4-amino-N-ethyl-N-α-methoxyethyl-anilin, 3-α-Methansulphonamidoethyl-4-amino-N,N-diethylanilin, 3-Methoxy-4-amino-N-ethyl-N-α-hydroxyethylanilin, 3-Methoxy-4-amino-N-ethyl-N-α-methoxyethylanilin, 3-Acetamido-4-amino-N,N-diethylanilin, 4-Amino-N,N-dimethylanilin, N-Ethyl-N-α-[α′-(α″-methoxyethoxy)ethoxy]ethyl-3-methyl-4-aminoanilin, N-Ethyl-N-α-(α′-methoxyethoxy)ethyl-3-methyl-4-aminoanilin sowie die Salze solcher Verbindungen, wie z.B. Sulfate, Hydrochloride oder Toluolsulfonate.

Die Stabilisatoren der Formel I und II sowie die erfindungsgemässen neuen Stabilisatoren können allein oder zusammen mit dem Farbkuppler und gegebenenfalls weiteren Zusätzen in das farbphotographische Material eingearbeitet werden, indem man sie in hochsiedenden organischen Lösungsmitteln vorlöst. Vorzugsweise verwendet man Lösungsmittel die höher als 160°C sieden. Typische Beispiele solcher Lösungsmittel sind die Ester von Phthalsäure, Phosphorsäure, Zitronensäure, Benzoesäure oder von Fettsäuren, sowie Alkylamide und Phenole.

Meist verwendet man zusätzlich noch ein niedrig siedendes Lösungsmittel, um das Einarbeiten der Zusätze in das farbphotographische Material zu erleichtern. Beispiele für solche Lösungsmittel sind Ester wie z.B. Ethylacetat, Alkohole wie z.B. Butanol, Ketone wie z.B. Methyl-isobutylketon, Chlorkohlenwasserstoffe wie z.B. Methylenchlorid, oder Amide wie z.B. Dimethylformamid. Sind die Zusätze selbst flüssig, so kann man sie auch ohne Zuhilfenahme von Lösungsmitteln in das Photomaterial einarbeiten.

Weitere Details über verwendbare hochsiedende Lösungsmittel sind in den folgenden Veröffentlichungen zu finden.

Phosphate: GB-A-791,219, BE-A-755,248, JP-A-76/76739, 78/27449, 78/218,252, 78/97573, 79/148,113, 82/216,177, 82/93323 und 83/216,177.

Phthalate: GB-A-791,219, JP-A-77/98050, 82/93322, 82/216,176, 82/218,251, 83/24321, 83/45699, 84/79888.

Amide: GB-A-791,219, JP-A-76/105,043, 77/13600, 77/61089, 84/189,556, US-A-928,741.

Phenole: GB-A-820,329, FR-A-1,200,657, JP A-69/69946, 70/3818, 75/123,026, 75/82078, 78/17914, 78/21166, 82/212,114 und 83/45699.

Andere sauerstoffhaltige Verbindungen: US-A-3,748,141, 3,779,765, JP-A-73/75126, 74/101,114, 74/10115, 75/101,625, 76/76740, 77/61089 und BE-A-826,039.

Sonstige Verbindungen: JP-A-72/115,369, 72/130,258, 73/127,521, 73/76592, 77/13193, 77/36294, 79/95233 und Research Disclosure 82/21918.

Die Menge von hochsiedendem Lösungsmittel liegt z.B. im Bereich von 0,1 bis 300 %, vorzugsweise 10 bis 100 %, bezogen auf den Farbkuppler.

Die photographischen Schichten können ferner Farbschleier-Inhibitoren enthalten. Diese verhindern das Entstehen von Farbschleiern, wie sie beispielsweise durch Reaktion des Kupplers mit unabsichtlich oxidiertem Entwickler oder mit Nebenprodukten des Farbbildungsprozesses entstehen. Solche Farbschleierinhibitoren sind meist Hydrochinonderivate, können aber auch Derivate von Aminophenolen, von Gallussäure oder von Ascorbinsäure sein. Typische Beispiele hierfür sind in folgenden Veröffentlichungen zu finden: US-A-2,360,290, 2,336,327, 2,403,721, 2,418,613, 2,675,314, 2,701,197, 2,704,713, 2,728,659, 2,732,300, 2,735,365; EP-A-124,877; JP-A-75/92988, 75/92989, 75/93928, 75/110,337 und 77/146,235.

Die photographischen Schichten können auch sogenannte DIR-Kuppler (Development Inhibition Release) enthalten, die mit dem oxidierten Entwickler farblose Verbindungen ergeben. Sie werden zugesetzt zur Verbesserung der Schärfe und Körnigkeit der Farbbilder.

Die photographischen Schichten können auch UV-Absorber enthalten. Diese filtern das UV-Licht aus und schützen damit die Farbstoffe, die Kuppler oder sonstige Komponenten gegen Lichtabbau. Beispiele für solche UV-Absorber sind 2-(2-Hydroxyphenyl)-benztriazole, 2-Hydroxybenzophenone, Salicylsäureester, Acrylnitrilderivate oder Thiazoline. Solche UV-Absorber sind z.B. in folgenden Veröffentlichungen näher erläutert: US-A-3,314,794, 3,352,681, 3,705,805, 3,707,375, 4,045,229, 3,700,455, 3,533,794, 3,698,907, 3,705,805, 3,738,837 und JP-A-71/2784. Bevorzugte UV-Absorber sind die 2-(2-Hydroxyphenol)-benztriazole.

Die photographischen Schichten können auch weitere phenolische Verbindungen enthalten, die als Lichtschutzmittel für das Farbbild sowie als Mittel gegen Farbschleier wirken. Sie können in einer lichtempfindlichen Schicht (Farbschicht) oder in einer Zwischenschicht enthalten sein, allein oder zusammen mit anderen Additiven. Solche Verbindungen sind z.B. in den folgenden Veröffentlichungen näher beschrieben: US-A-3,700,455, 3,591,381, 3,573,052, 4,030,931, 4,174,220, 4,178,184, 4,228,235, 4,279,990, 4,346,165, 4,366,226, 4,447,523, 4,528,264, 4,581,326, 4,526,146, 4,559,297, GB-A-1,309,277, 1,547,302, 2,023,862, 1,135,788, 2,139,370, 2,156,091; DE-A-2,301,060, 2,347,708, 2,526,468, 2,621,203, 3,323,448; DD-A-200,691, 214,468; EP-A-106, 799, 113,124, 125,522 159,912, 161,577, 164,030, 167,762, 176,845; JP-A-74/134,326, 76/127,730, 76/30462, 77/3822, 77/154,632, 78/10842, 79/48535, 79/70830, 79/73032,

79/147,038, 79/154,325, 79/155,836, 82/142,638, 83/224,353, 84/5246, 84/72443, 84/87456, 84/192,246, 84/192,247, 84/204,039, 84/204,040, 84/212,837, 84/220,733, 84/222,836, 84/228,249, 86/2540, 86,8843, 86/18835, 86/18836, 87/11456, 87/42245, 87/62157, 86/6652 sowie in Research Disclosure 79/17804.

Die photographischen Schichten können auch gewisse Phosphor-III-Verbindungen, insbesondere Phosphite und Phosphonite, enthalten. Diese fungieren als Lichtschutzmittel für die Farbbilder sowie als Dunkellager-Stabilisator für Magentakuppler. Man setzt sie vorzugsweise den hochsiedenden Lösungsmitteln zu, zusammen mit dem Kuppler. Solche Phosphor-III-Verbindungen sind z.B. in den folgenden Veröffentlichungen näher beschrieben: US-A-4,407,935, US-A-4,436,811, EP-A-181,289, JP-A-73/32728, JP-A-76/1420 und JP-A-55/57741.

Die photographischen Schichten können auch metallorganische Komplexe enthalten, die Lichtschutzmittel für die Farbbilder sind, insbesondere für die Magenta-Farbstoffe. Solche Verbindungen und deren Kombination mit anderen Additiven sind z.B. in folgenden Veröffentlichungen näher beschrieben: US-A-4,050,938, 4,239,843, 4,241,154, 4,242,429, 4,241,155, 4,242,430, 4,273,854, 4,246,239, 4,271,253, 4,242,431, 4,248,949, 4,245,195, 4,268,605, 4,246,330, 4,269,926, 4,245,018, 4,301,223, 4,343,886, 4,346,165, 4,590,153; JP-A-81/167,138, 81/168,652, 82/30834, 82/161,744; EP-A-137,271, 161,577, 185,506; DE-A-2,853,865.

Die photographischen Schichten können auch Hydrochinonverbindungen enthalten. Diese wirken als Lichtschutzmittel für die Farbkuppler und für die Farbbilder sowie als Abfänger von oxidiertem Entwickler in Zwischenschichten. Sie werden vor allem in der Magentaschicht verwendet. Solche Hydrochinon-Verbindungen und deren Kombinationen mit anderen Additiven sind z.B. in folgenden Veröffentlichungen näher beschrieben:
US-A-2,360,290, 2,336,327, 2,403,721, 2,418,613, 2,675,314, 2,701,197, 2,710,801, 2,732,300, 2,728,659, 2,735,765, 2,704,713, 2,937,086, 2,816,028, 3,582,333, 3,637,393, 3,700,453, 3,960,570, 3,935,016, 3,930,866, 4,065,435, 3,982,944, 4,232,114, 4,121,939, 4,175,968, 4,179,293, 3,591,381, 3,573,052, 4,279,990, 4,429,031, 4,346,165, 4,360,589, 4,346,167, 4,385,111, 4,416,978, 4,430,425, 4,277,558, 4,486,155, 4,504,572, 4,559,297, FR-A-885,982; GB-A-891,158, 1,156,167, 1,363,921, 2,022,274, 2,066,975, 2,071,348, 2,081,463, 2,117,526, 2,156,091; DE-A-2,408,168, 2,726,283, 2,639,930, 2,901,520, 3,308,766, 3,320,483, 3,323,699; DD-A-216,476, 214,468, 214,469, EP-A-84290, 110,214, 115,305, 124,915, 124,877, 144,288, 147,747, 178,165, 161,577; JP-A-75/33733, 75/21249, 77/218,130, 77/146,234, 79/70036, 79/133,131, 81/83742, 81/87040, 81/109,345, 83/134,628, 82/22237, 82/112,749, 83/17431, 83/21249, 84/75249 84/149,348, 84/182,785, 84/180,557, 84/189,342, 84/228,249, 84/101,650, 79/24019, 79/25823, 86/48856, 86/48857, 86/27539, 86/6652, 86/72040, 87/11455, 87/62157, sowie in Research Disclosure 79/17901, 79/17905, 79/18813, 83/22827 und 84/24014.

Die photographischen Schichten können auch Derivate von Hydrochinonethern enthalten. Diese Verbindungen wirken als Lichtschutzmittel und sind besonders geeignet zur Stabilisierung von Magenta-Farbstoffen. Solche Verbindungen und deren Kombination mit anderen Additiven sind z.B. in folgenden Veröffentlichungen näher beschrieben:
US-A 3,285,937, 3,432,300, 3,519,429, 3,476,772, 3,591,381, 3,573,052, 3,574,627, 3,573,050, 3,698,909, 3,764,337, 3,930,866, 4,113,488, 4,015,990, 4,113,495, 4,120,723, 4,155,765, 4,159,910, 4,178,184, 4,138,259, 4,174,220, 4,148,656, 4,207,111, 4,254,216, 4,314,011, 4,273,864, 4,264,720, 4,279,990, 4,332,886, 4,436,165, 4,360,589, 4,416,978, 4,385,111, 4,459,015, 4,559,297; GB-A 1,347,556, 1,366,441, 1,547,392, 1,557,237, 2,135,788; DE-A 3,214,567; DD-214,469, EP-A 161,577, 167,762, 164,130, 176,845; JP-A 76/123,642, 77/35633, 77/147,433, 78/126, 78/10430, 78/53321, 79/24019, 79/25823, 79/48537, 79/44521, 79/56833, 79/70036, 79/70830, 79/73032, 79/95233, 79/145,530, 80/21004, 80/50244, 80/52057, 80/70840, 80/139,383, 81/30125, 81/151,936, 82/34552, 82/68833, 82/204,036, 82/204,037, 83/134,634, 83/207,039, 84/60434, 84/101,650, 84/87450, 84/149,348, 84/182,785, 86,72040, 87/11455, 87/62157, 87/63149, 86/2151, 86/6652, 86/48855 sowie in Research Disclosure 78/17051.

Die Erfindung betrifft auch die Verwendung der erfindungsgemässen Verbindungen der Formeln Ia und IIa, als Stabilisatoren in farbphotographischen Aufzeichnungsmaterialien.

Die nachfolgenden Beispiele dienen der weiteren Erläuterung der Erfindung. Alle Reaktionen in den Herstellungsbeispielen wurden unter Stickstoff durchgeführt.
Etwaige Prozente sind Gewichtsprozente.

Herstellungsbeispiele

Beispiel 1: [2,4-Bis-(5′-methoxycarbonyl-2′-methylpent-2′-methylpent-2′-yl)-phenyl]-4-hydroxy-3,5-di-t-butylbenzoat

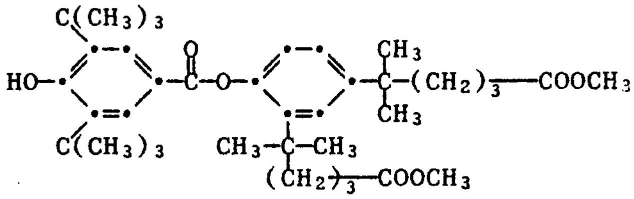

7,5 g 2,4-Bis-(5′-methoxycarbonyl-2′-yl)-phenol und 5,4 g 3,5-Di-t-butyl-4-hydroxybenzoylchlorid werden in 80 ml siedendem Toluol während 35 Stunden erwärmt. Anschliessend wird das Lösungsmittel unter erniedrigtem Druck entfernt und das zurückbleibende Oel mittels Säulenchromatographie ($SiO_2$; Toluol:Essigester = 9:1) gereinigt. Man erhält 10,1 g des Endproduktes als farbloses Oel.

Beispiel 2: 4′-Methyl-2′-[4″-(0,0-dimethylphosphonato-2″-methylbutyl]phenyl-4-hydroxy-3,5-di-t-butylbenzoat

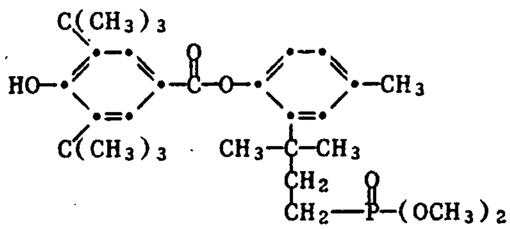

2,86 g 0,0-Dimethyl-[3-(2′-hydroxy-5′-methylphenyl)-3-methylbut-1-yl]phosphonat und 2,69 g 4-Hydroxy-3,5-di-t-butyl-benzoylchlorid werden in 40 ml siedendem Toluol während 6 Stunden erwärmt. Das Reaktionsgemisch wird gewaschen und getrocknet und unter erniedrigtem Druck von Lösungsmittel befreit. Anschliessend wird das zurückbleibende Oel, wie im Beispiel 1, mittels Säurechromatographie gereinigt. Man erhält 1,8 g des Endproduktes als farbloses, viskoses Oel.

Beispiel 3: 0,0-Dimethyl-[3-(2′-acetoxy-5′-methylphenyl)-3-methyl-but-1-yl]-phosphonat

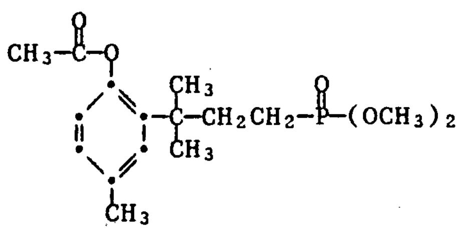

2,86 g 0,0-Dimethyl[3-(2′-hydroxy-5′-methylphenyl)-3-methylbut-1-yl]-phosphonat werden in 30 ml Methylenchlorid gelöst. 1,9 ml Pyridin werden zur Lösung gegeben und anschliessend auf 0 °C gekühlt. Man gibt tropfenweise 1,72 g Acetylchlorid in 5 ml Methylenchlorid während 15 Minuten dazu, rührt das Reaktionsgemisch während 4 Stunden bei Raumtemperatur und giesst es anschliessend in Eiswasser. Die organische Phase wird gewaschen, getrocknet und unter erniedrigtem Druck vom Lösungsmittel befreit. Das zurückbleibende Oel wird, wie im Beispiel 1, mittels Säulenchromatographie gereinigt.
Man erhält 1,8 g des Endproduktes als gelbes Oel.

Beispiel 4: 0,0-Dimethyl-[3-(2′-methoxyoxalyloxy-5′-methylphenyl-3-methylbut-1-yl]-phosphonat

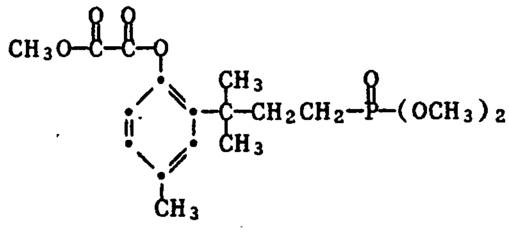

Man verfährt wie in Beispiel 3 beschrieben jedoch mit dem Unterschied, dass man die entsprechende Menge Oxalsäuremonomethylesterchlorid einsetzt, und 18 Stunden lang bei Raumtemperatur rührt. Man erhält 3,6 g des Endproduktes als leicht gelbes Oel.

Beispiel 5: 0,0-Dimethyl-[3-[5′-methyl-2′-trimethylsiloxyphenyl)-3-methylbut-1-yl]-phosphonat

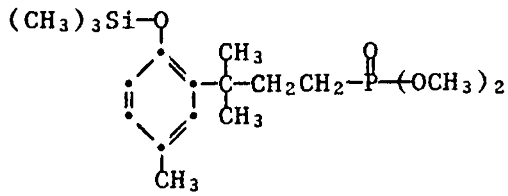

Man verfährt wie in Beispiel 3 beschrieben, jedoch mit dem Unterschied, dass man die entsprechende Menge Trimethylchlorsilan einsetzt und 18 Stunden lang bei Raumtemperatur rührt. Man erhält 2,8 g des Endprodukts als leicht braunes Oel.

Beispiel 6: Tris-2-[(4′-dimethylphosphonato-2′-methylbut-2-yl)-4-methylphenyl]-phosphit

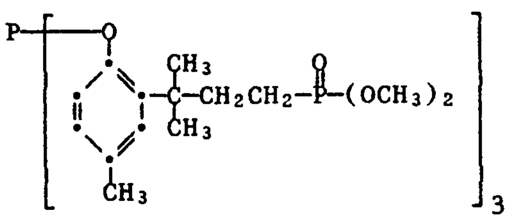

Man verfährt wie in Beispiel 3 beschrieben, jedoch mit dem Unterschied, dass man die entsprechende Menge Phosphortrichlorid einsetzt und während 24 Stunden unter Rückfluss kocht. Man erhält 1,46 g des Endproduktes als farbloses Oel.

Beispiel 7: 4-t-Butyl-2-(5′-methoxycarbonyl-2′-methylpent-2′-yl)-methoxy-oxalyloxy-benzol

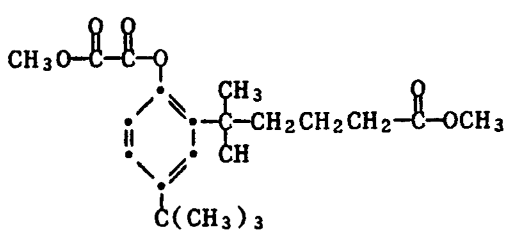

2,9 g 4-t-Butyl-2-(5′-methoxycarbonyl-2′-methylpent-2′-yl)-phenol und 0,95 g Pyridin werden in 20 ml

Methylenchlorid gelöst. Die Lösung wird auf 0°C abgekühlt und tropfenweise mit 1,35 g Oxalsäuremonomethylesterchlorid während 10 Minuten versetzt. Das Reaktionsgemisch wird 1 Stunde bei Raumtemperatur gerührt und anschliessend in Eiswasser gegossen. Die organische Phase wird gewaschen, getrocknet und unter erniedrigtem Druck vom Lösungsmittel befreit.
Das zurückbleibende Oel wird mittels Säurechromatographie ($SiO_2$; Essigester:Petroleumether = 1:5) gereinigt. Man erhält 3,0 g des Endproduktes als leicht gelbes Oel.

Beispiel 8: 2,4-Bis-(5′-methoxycarbonyl-2′-methylpent-2′-yl)-trimethylsiloxy-benzol

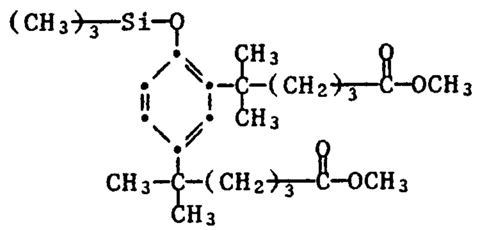

2,0 g 2,4-Bis-(5′-methoxycarbonyl-2′-methylpent-2′-yl)-phenol und 1,04 g Pyridin werden in 20 ml Methylenchlorid gelöst. Die Lösung wird auf 0°C abgekühlt und tropfenweise mit 1,14 g Trimethylchlorsilan in 10 ml $CH_2Cl_2$ während 10 Minuten versetzt. Das Reaktionsgemisch wird 90 Minuten lang bei Raumtemperatur gerührt und anschliessend in ein Gemisch von 10%iger $NaHCO_3$-Lösung/$CH_2Cl_2$/Eis gegeben. Die organische Phase wird gewaschen, getrocknet und unter erniedrigtem Druck vom Lösungsmittel befreit. Das zurückbleibende Oel wird mittels Säulenchromatographie ($SiO_2$; Essigester:Hexan = 1:12) gereinigt. Man erhält 1,8 g des Endproduktes als farbloses Oel.

Beispiel 9: Pentaerythrityl-tetrakis[5-(2′-methoxyoxalyloxy-3′,5′-dimethylphenyl)-5-methylhexanoat]

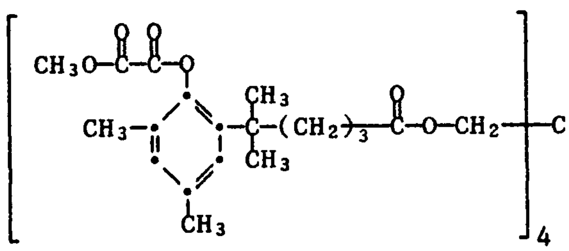

1,07 g Pentaerythrityl-tetrakis-[5-(2′-hydroxy-3′,5′-dimethylphenyl)-5-methylhexanoat] werden in 9 ml Toluol und 1 ml Dimethylformamid gelöst. 1,0 g Triethylamin wird der Lösung zugefügt und das Gemisch auf 0°C abgekühlt. Anschliessend wird dem Gemisch eine Lösung von 0,98 g Oxalsäuremonomethylesterchlorid in 4,5 ml Toluol und 0,5 ml Dimethylformamid zugetropft. Das entstandene Reaktionsgemisch wird während 24 Stunden bei Raumtemperatur gerührt und dann ins Eiswasser gegossen. Die organische Phase wird gewaschen, getrocknet unter erniedrigtem Druck vom Lösungsmittel befreit. Das zurückbleibende Oel wird mittels Säulenchromatographie ($SiO_2$;Essigester:Petroleumether = 1:3) gereinigt. Man erhält 0,6 g des Endproduktes als leicht gelbes Oel.

Beispiel 10: Pentaerythrityl-tetrakis-[5-(2′-trimethylsiloxy-3′,5′-dimethylphenyl)-5-methylhexanoat]

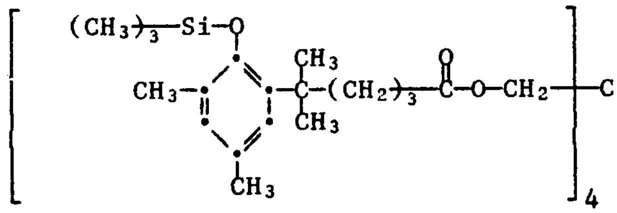

1,0 g Pentaerythrityl-tetrakis-[5-(2′-hydroxy-3′,5′-dimethylphenyl)-5-methylhexanoat] und 1,19 g 1,8-Diazabicyclo[5.4.0]undec-7-en (DBU) werden in 20 ml Toluol gelöst. Die Lösung wird auf 0 °C abgekühlt und mit einer Lösung aus 0,63 g Trimethylchlorsilan in 10 ml Toluol tropfenweise versetzt.
Das Reaktionsgemisch wird während 18 Stunden bei Raumtemperatur gerührt und anschliessend in ein Gemisch aus 10%-iger $NaHCO_3$/Eiswasser gegossen. Die organische Phase wird gewaschen, getrocknet und unter erniedrigtem Druck vom Lösungsmittel befreit. Das zurückbleibende Oel wird mittels Säulenchromatographie ($SiO_2$; Hexan:Essigester = 19:1) gereinigt. Man erhält 0,58 g des Endproduktes als farbloses viskoses Oel.

Anwendungsbeispiele

Beispiele 11-13: 0,087 g des Gelbkupplers der Formel

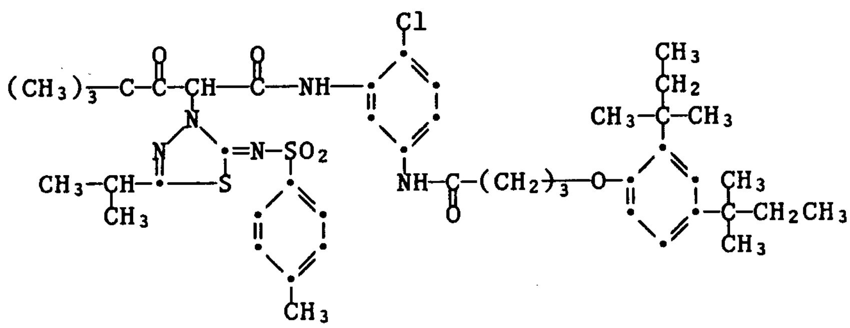

werden in 2,0 ml eines Gemisches bestehend aus einem Stabilisator der Formel I oder II und Ethylacetat (2,25 g/100 ml) gelöst. Zu 1,0 ml dieser Lösung gibt man 9,0 ml einer 2,3%-igen wässrigen Gelatinelösung, die auf einem pH-Wert von 6,5 eingestellt ist, und 1,744 g/l des Netzmittels der Formel

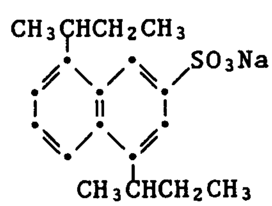

Zu 5,0 ml der so erhaltenen Kuppleremulsion gibt man 2 ml einer Silberbromid-Emulsion mit einem Silbergehalt von 6,0 g/l sowie 1,0 ml einer 0,7%-igen wässrigen Lösung des Härters der Formel

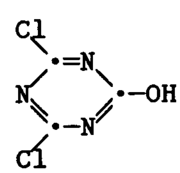

und vergiesst es auf ein 13 x 18 cm Kunststoff-beschichtetes Papier. Nach einer Härtungszeit von 7 Tagen

werden die Proben hinter einem SilberStufenkeil mit 125 Lux•s belichtet und anschliessend im Ektaprint 2®-Prozess der Firma Kodak verarbeitet.

Die eine Hälfte der so erhaltenen Gelbkeile werden in einem Atlas Weather-Ometer mit einer 2500 W-Xenonlampe mit total 30 k Joule/$cm^2$ bestrahlt, und die andere Hälfte in einem Atlas Weather-Ometer hinter einen UV-Filter (Kodak 2C) mit einer 2500 W-Xenonlampe mit total 60 k Joule/$cm^2$ bestrahlt.

Eine Probe ohne Stabilisator läuft als Standard mit.

Die folgende Tabelle 1 gibt den bei der Bestrahlung eingetretenen Farbdichteverlust beim Absorptionsmaximum des gelben Farbstoffes, gemessen mit einem Densitometer TR 924A der Fa. Macbeth, wieder.

Der Lichtschutzeffekt ist aus dem Farbdichteverlust ersichtlich. Je kleiner der Dichteverlust, desto höher ist die Lichtschutzwirksamkeit.

Tabelle 1

| Beispiel | Stabilisator | Farbdichteverlust in % | |
|---|---|---|---|
| | | 30 k Joule/$cm^2$ | 60 k Joule/$cm^2$ |
| - | Keiner | 75 | 33 |
| 11 | 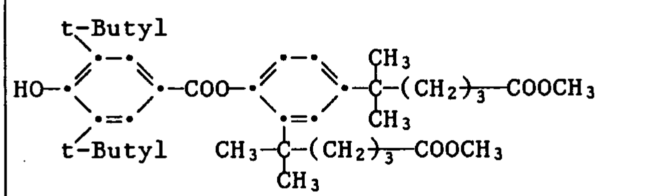 | 34 | 13 |
| 12 | 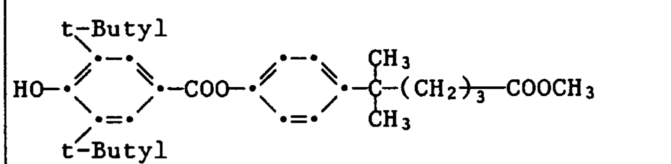 | 33 | 13 |
| 13 | 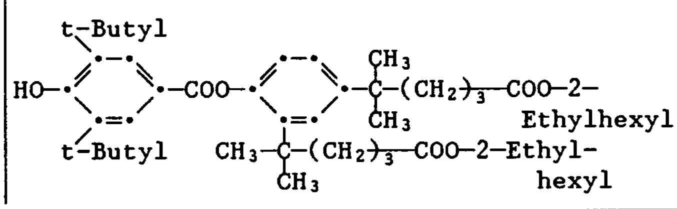 | 36 | 13 |

Beispiele 14 und 15: Je 0,033 g des Cyan-Kupplers der Formel

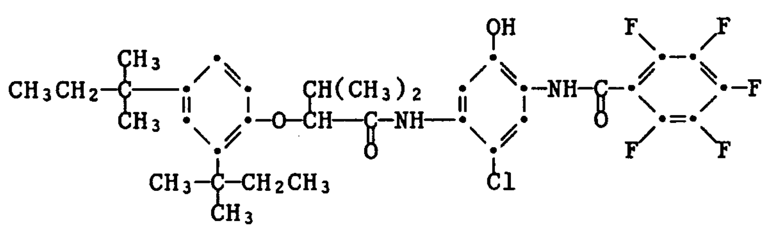

und eines der in Tabelle 2 angegebenen Stabilisators werden in 2,0 ml eines Gemisches von Dibutylphthalat/Ethylacetat (0,8 g/100 ml) gelöst.

Zu 1,0 ml dieser Lösung gibt man 9,0 ml einer 2,3%-igen wässrigen Gelatinelösung, die auf einen pH-Wert von 6,5 eingestellt ist, und 0,872 g/l des Netzmittels aus Beispiel 11.

Im weiteren verfährt man mit der Emulsion wie in Beispiel 11 beschrieben, jedoch mit dem Unterschied, dass die Silberbromid-Emulsion einen Silbergehalt von 3 g/l aufweist.

Die erhaltenen Farbstufenkeile werden in einem Atlas Weather-Ometer mit einer 2500 W-Xenonlampe mit insgesamt 30 k Joule/$cm^2$ bestrahlt und anschliessend der Farbdichteverlust, wie in Beispiel 11 beschrieben, bestimmt.

Eine Probe ohne Stabilisator läuft als Standard mit.

Die Ergebnisse sind in der nachfolgenden Tabelle 2 zusammengefasst.

Tabelle 2

| Beispiel | Stabilisator | Farbdichteverlust in % bei 30 k Joule/$cm^2$ |
|---|---|---|
| - | Keiner | 44 |
| 14 | 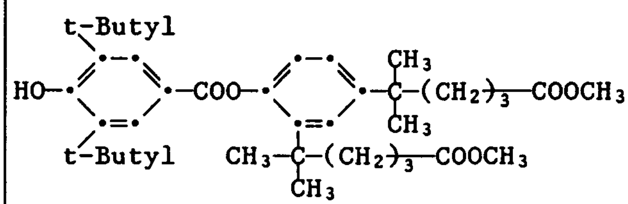 | 37 |
| 15 | 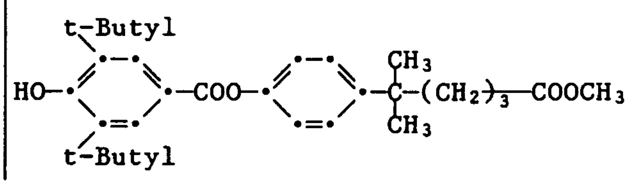 | 38 |

Beispiel 16-20: Je 0,025 g des Cyan-Kupplers der Formel

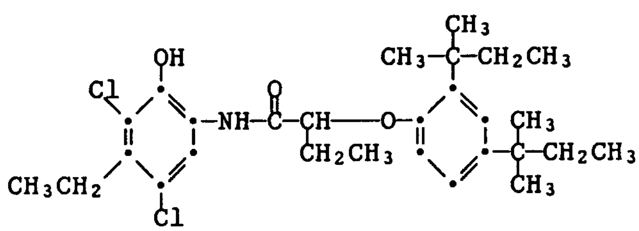

und eines der in Tabelle 3 angegebenen Stabilisators, werden in 2,0 ml eines Gemisches von Dibutylphthalat/Ethylacetat (0,8 g/100 gelöst.

Im weiteren verfährt man wie in Beispiel 16. Die erhaltenen Farbstufenkeile werden in einem Klimaschrank 28 Tage lang bei 75°C und 60 % relativer Luftfeuchtigkeit gelagert. Anschliessend wurde der Farbdichteverlust, wie in Beispiel 11 beschrieben, bestimmt.

Eine Probe ohne Stabilisator läuft als Standard mit. Die Ergebnisse sind in der nachfolgenden Tabelle 3 zusammengefasst.

Tabelle 3

| Beispiel | Stabilisator | Farbdichteverlust in % nach 28 Tagen Klimaschranklagerung |
|---|---|---|
| - | Keiner | 11 |
| 16 | 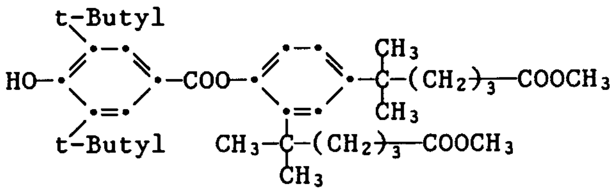 | 5 |
| 17 | 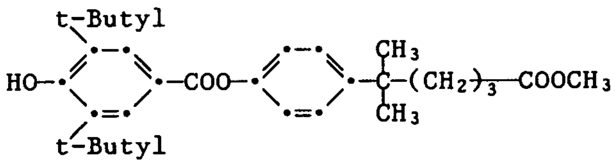 | 5 |
| 18 | 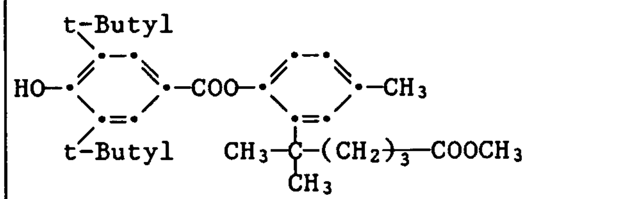 | 6 |
| 19 | 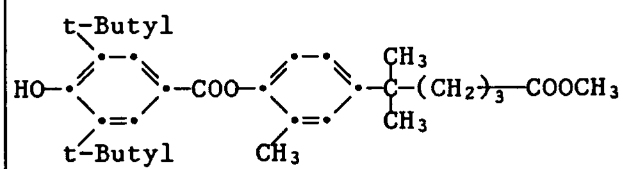 | 6 |
| 20 | 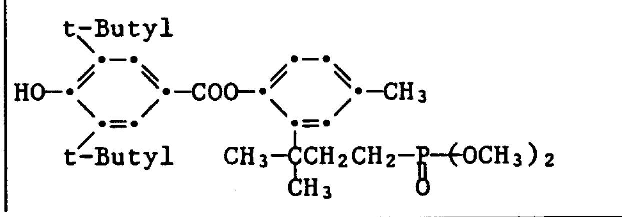 | 6 |

Beispiele 21 und 22: je 0,087 g des in Beispiel 11 beschriebenen Gelbkupplers und eines in Tabelle 4 angegebenen Stabilisators werden in 2 ml eines Gemisches von Dibutylphthalat/Ethylacetat (1,5 g/100 ml) gelöst. Im weiteren verfährt man gemäss Beispiel 11.

Die erhaltenen Farbstufenkeile werden in einem Atlas Weather-Ometer hinter einem UV-Filter (Kodak 2C) mit einer 2500 W-Xenonlampe mit insgesamt 60 k Joule/cm$^2$ bestrahlt und anschliessend die Farbdichteverluste gemäss Beispiel 11 bestimmt.

Die Ergebnisse sind in der nachfolgenden Tabelle 4 zusammengefasst.

Tabelle 4

| Beispiel | Stabilisator | Farbdichteverlust in % bei 60 k Joule/cm² |
|---|---|---|
| - | Keiner | 30 |
| 21 | 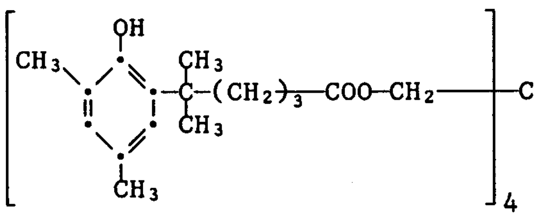 | 13 |
| 22 | 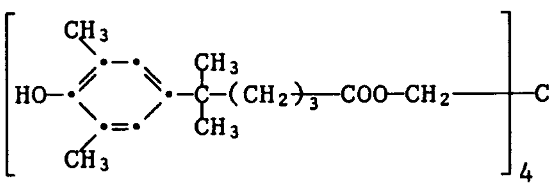 | 16 |

**Patentansprüche**

1. Farbphotographisches Aufzeichnungsmaterial, das mindestens einen Blaugrün-, Purpur- oder Gelbkuppler sowie einen phenolischen Stabilisator enthält, dadurch gekennzeichnet, dass es als Stabilisator 20-1000 mg/$m^2$ mindestens einer Verbindung der Formel I oder II

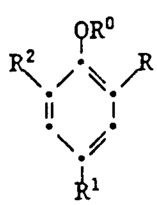

(I)

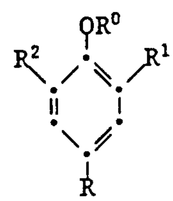

(II)

enthält,
worin R eine Gruppe der Formel III oder IV

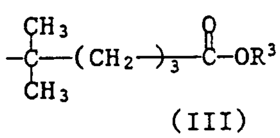

(III)

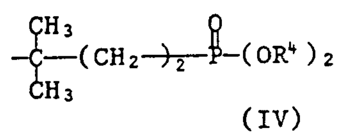

(IV)

bedeutet,

$R^1$ Wasserstoff, $C_1$-$C_8$-Alkyl, Cyclohexyl, Phenyl-$C_1$-$C_4$-Alkyl oder eine Gruppe der Formel III oder IV ist, und

$R^2$ eine für $R^1$ genannte Bedeutung hat, unter der Bedingung, dass in der Formel II $R^1$ und $R^2$ nicht gleichzeitig Wasserstoff bedeuten können, oder $R^2$ eine Gruppe

der Formel

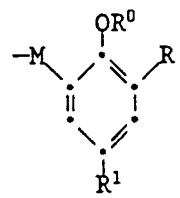

oder

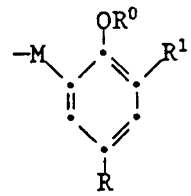

bedeutet, wobei M für eine direkte Bindung, $-CH_2-$ oder -S- steht,

$R^3$ eine Gruppe der Formel V oder VI

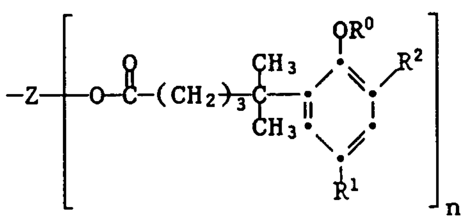

(V)

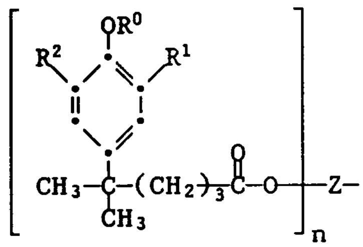

(VI)

bedeutet, wobei n eine Zahl 1 bis 3 ist und Z ein $C_2$-$C_{18}$-Alkylrest ist, welcher 2 bis 4 Valenzen hat und gegebenenfalls durch ein oder mehrere O- und/oder S-Atome unterbrochen ist,

$R^4$ $C_1$-$C_{12}$-Alkyl bedeutet,

$R^0$ $-CO-R^5$, $-SO_2-R^6$, $-COOR^3$, $-CO-COOR^3$, $-Si(R^7)(R^8)(R^9)$ oder eine Gruppe der Formel VII, VIII oder IX

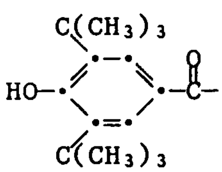

(VII)

,

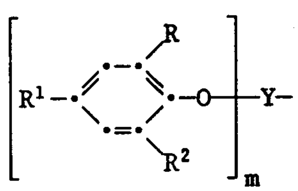

(VIII)

oder

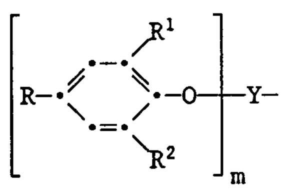

(IX)

bedeutet, wobei m die Zahl 1 oder 2 ist, und

Y bei m = 1 $>Si(R^7)(R^8)$ und

bei m = 2 $>P-$ bedeutet,

oder $R^0$ Wasserstoff ist, wenn n in den Formeln (V) und (VI) 3 ist,

$R^5$ für $C_1$-$C_{20}$-Alkyl, $C_2$-$C_{18}$-Alkenyl, $C_5$-$C_{12}$-Cycloalkyl, ein gegebenenfalls mit ein oder zwei Alkylgruppen substituiertes Phenyl oder Naphthyl steht, oder Phenyl-$C_1$-$C_4$-Alkyl ist,

$R^6$ für $C_1$-$C_4$-Alkyl, Phenyl oder Tolyl steht, und

$R^7$, $R^8$ und $R^9$ unabhängig voneinander $C_1$-$C_4$-Alkyl, Phenyl oder Benzyl sind.

**2.** Farbphotographisches Aufzeichnungsmaterial gemäß Anspruch 1, dadurch gekennzeichnet, daß es einen Stabilisator enthält, worin $R^0$ -CO-$R^5$, -CO-COO$R^3$, -Si($R^7$)($R^8$)($R^9$) oder eine Gruppe der Formel VII, VIII oder IX bedeutet.

**3.** Farbphotographisches Aufzeichnungsmaterial gemäß Anspruch 2, dadurch gekennzeichnet, daß es einen Stabilisator enthält, worin $R^0$ eine Gruppe der Formel VII

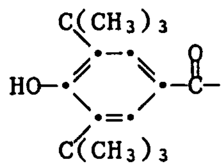

(VII)

bedeutet.

**4.** Farbphotographisches Aufzeichnungsmaterial gemäss Anspruch 1, dadurch gekennzeichnet, dass man Verbindungen der Formel I oder II einsetzt, welche flüssig oder in photographischen Lösungsmitteln leicht löslich sind.

**5.** Farbphotographisches Aufzeichnungsmaterial gemäss Anspruch 1, worin die Verbindungen der Formel I oder II flüssig sind.

**6.** Verbindungen der Formel Ia oder IIa

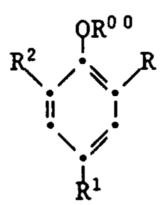

(Ia)

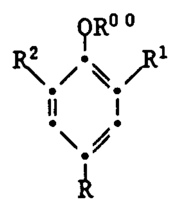

(IIa)

,

worin $R^{00}$ Wasserstoff, -CO-$R^5$, -$SO_2$-$R^6$, -COO$R^3$, -CO-COO$R^3$, -Si($R^7$)($R^8$)($R^9$) oder eine Gruppe der Formel VII, VIII oder IX

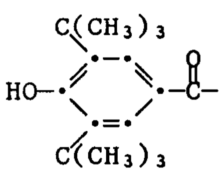

,

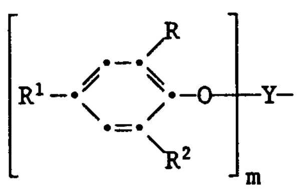

oder

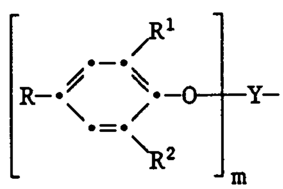

(VII) (VIII) (IX)

bedeutet, wobei m die Zahl 1 oder 2 ist, und

Y bei m = 1 Si($R^7$)($R^8$) und

bei m = 2 P– bedeutet,

wobei jedoch für den Fall $R^{00}$ = H R für eine Gruppe der Formel

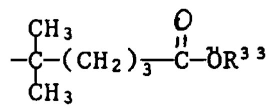

steht, worin $R^{33}$ eine Gruppe der Formeln Va oder VIa

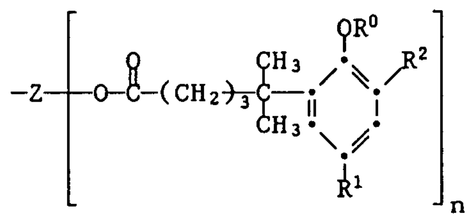

(Va)

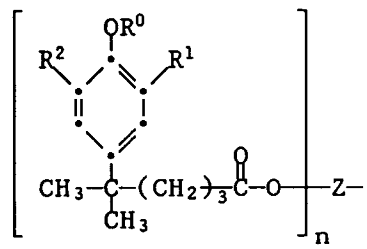

(VIa)

ist, worin n die Zahl 3 ist, Z die Gruppe

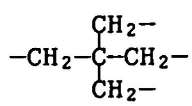

bedeutet,
und $R^0$, Wasserstoff, $-CO-R^5$, $-SO_2-R^6$, $-COOR^3$, $-CO-COOR^3$, $-Si(R^7)(R^8)(R^9)$ oder eine Gruppe der Formel VII, VIII oder IX

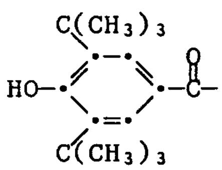

,

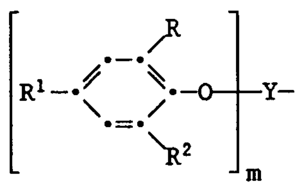

oder

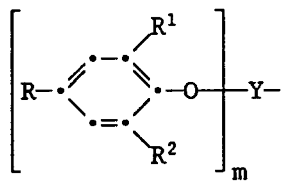

(VII) (VIII) (IX)

bedeutet, wobei m die Zahl 1 oder 2 ist, und

Y bei m = 1 $>Si(R^7)(R^8)$ und
bei m = 2 $>P-$ bedeutet,

R eine Gruppe der Formel III oder IV

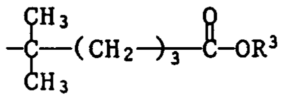

(III)

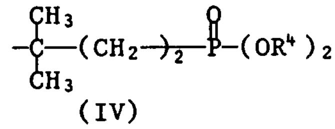

(IV)

bedeutet,

$R^1$ Wasserstoff, $C_1$-$C_8$-Alkyl, Cyclohexyl, Phenyl-$C_1$-$C_4$-Alkyl oder eine Gruppe der Formel III oder IV ist, und

$R^2$ eine für $R^1$ genannte Bedeutung hat, unter der Bedingung, dass in der Formel II $R^1$ und $R^2$ nicht gleichzeitig Wasserstoff bedeuten können, oder $R^2$ eine Gruppe der Formel

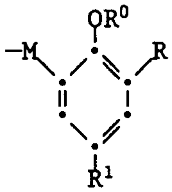

oder

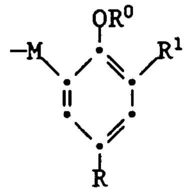

bedeutet, wobei M für eine direkte Bindung, $-CH_2-$ oder -S- steht,

$R^3$ $C_1$-$C_{20}$-Alkyl, das gegebenenfalls durch -OH, $-OCOR^5$ oder $-OR^5$ substituiert ist und/oder das gegebenenfalls durch ein oder mehrere O-Atome unterbrochen ist, $C_2$-$C_{18}$-Alkenyl, $C_5$-$C_{12}$-Cycloalkyl, ein gegebenenfalls mit ein oder zwei Alkylgruppen substituiertes Phenyl oder Naphthyl bedeutet, oder Phenyl-$C_1$-$C_4$-Alkyl, ein Rest ⊗- oder ⊗-$CH_2$-, worin ⊗- für einen 5- oder 6-gliedrigen O-haltigen Heterozyklus steht, der gegebenenfalls mit ein oder zwei $C_1$-$C_4$-Alkylgruppen substituiert ist, oder eine Gruppe der Formel V oder VI

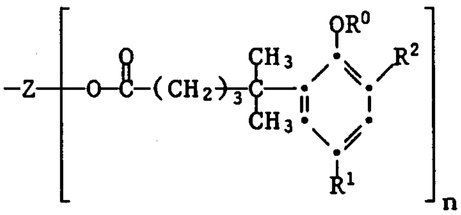

(V)

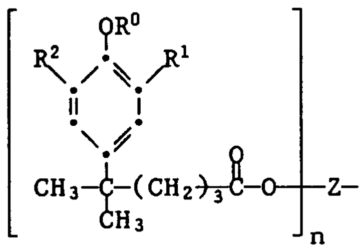

(VI)

bedeutet, wobei n eine Zahl 1 bis 3 ist und Z ein $C_2$-$C_{18}$-Alkylrest ist, welcher 2 bis 4 Valenzen hat und gegebenenfalls durch ein oder mehrere O- und/oder S-Atome unterbrochen ist,

$R^4$ $C_1$-$C_{12}$-Alkyl bedeutet,

$R^5$ für $C_1$-$C_{20}$-Alkyl, $C_2$-$C_{18}$-Alkenyl, $C_5$-$C_{12}$-Cycloalkyl, ein gegebenenfalls mit ein oder zwei Alkylgruppen substituiertes Phenyl oder Naphthyl steht, oder Phenyl-$C_1$-$C_4$-Alkyl ist,

$R^6$ für $C_1$-$C_4$-Alkyl, Phenyl oder Tolyl steht, und

$R^7$, $R^8$ und $R^9$ unabhängig voneinander $C_1$-$C_4$-Alkyl, Phenyl oder Benzyl sind.

**7.** Verbindungen gemäss Anspruch 6, worin $R^{00}$ in der Formel Ia oder IIa $-CO-R^5$, $-CO-COOR^3$, $-Si(R^7)-(R^8)(R^9)$ oder eine Gruppe der Formel VII, VIII oder IX bedeutet.

**8.** Verbindungen gemäss Anspruch 7, worin $R^{00}$ eine Gruppe der Formel VII

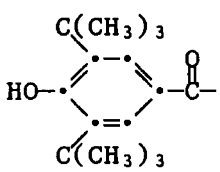

(VII)

bedeutet.

9. Verwendung von Verbindungen der Formel Ia oder IIa gemäss Anspruch 6 als Stabilisatoren in farbphotographischen Aufzeichnungsmaterialien.

## Claims

1. A colour photographic recording material containing at least one blue-green, purple or yellow coupler and a phenolic stabilizer, which contains, as the stabilizer, 20-1,000 mg/$m^2$ of at least one compound of the formula I or II

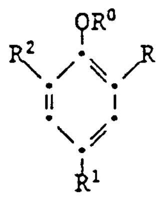

(I)

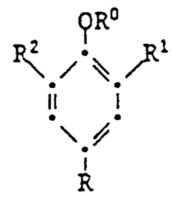

(II)

in which R is a group of the formula III or IV

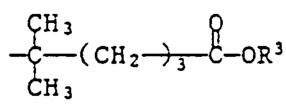

(III)

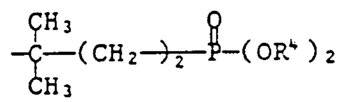

(IV)

$R^1$ is hydrogen, $C_1$-$C_8$alkyl, cyclohexyl, phenyl-$C_1$-$C_4$alkyl or a group of the formula III or IV, and $R^2$ is as defined for $R^1$, subject to the condition that $R^1$ and $R^2$ cannot simultaneously be hydrogen in the formula II, or $R^2$ is a group of the formula

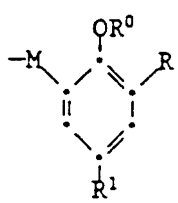

or

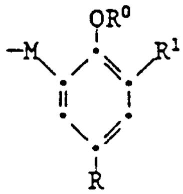

in which M is a direct bond, -$CH_2$- or -S-, $R^3$ is a group of the formula V or VI

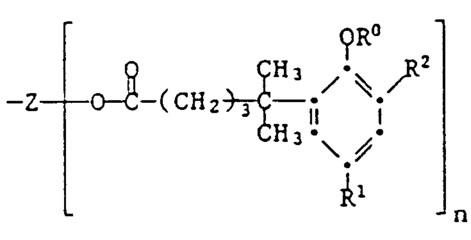

(V)

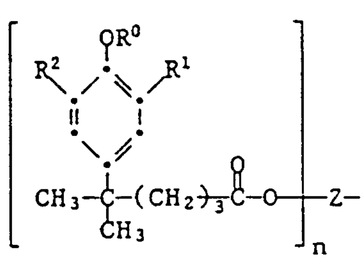

(VI)

in which n is a number from 1 to 3 and Z is a $C_2$-$C_{18}$alkyl radical which has 2 to 4 valencies and can be interrupted by one or more O and/or S atoms, $R^4$ is $C_1$-$C_{12}$alkyl, $R^0$ is -CO-$R^5$, -$SO_2$-$R^6$, -$COOR^3$,

-CO-COOR$^3$, -Si(R$^7$)(R$^8$)(R$^9$) or a group of the formula VII, VIII or IX

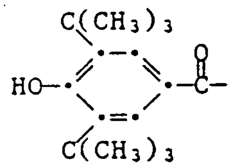

,

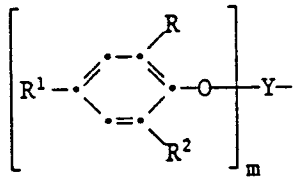

or

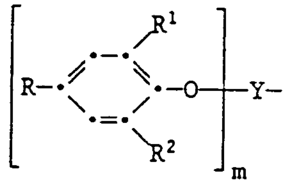

(VII) (VIII) (IX)

in which m is the number 1 or 2 and Y is

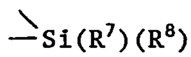 if m is 1 and is

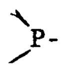 if m is 2,

or R$^0$ is hydrogen if n in the formulae (V) and (VI) is 3, R$^5$ is $C_1$-$C_{20}$alkyl, $C_2$-$C_{18}$alkenyl, $C_5$-$C_{12}$cycloalkyl, a phenyl or naphthyl which is unsubstituted or substituted by one or two alkyl groups, or is phenyl-$C_1$-$C_4$alkyl, R$^6$ is $C_1$-$C_4$alkyl, phenyl or tolyl and R$^7$, R$^8$ and R$^9$ independently of one another are $C_1$-$C_4$alkyl, phenyl or benzyl.

**2.** A colour photographic recording material according to claim 1, which contains a stabilizer wherein R$^0$ is -CO-R$^5$, -CO-COOR$^3$, -Si(R$^7$)(R$^8$)(R$^9$) or a group of the formula VII, VIII or IX.

**3.** A colour photographic recording material according to claim 2, which contains a stabilizer wherein R$^0$ is a group of the formula VII

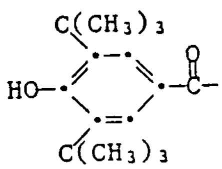

(VII).

**4.** A colour photographic recording material according to claim 1, wherein compounds of the formula I or II which are liquid or readily soluble in photographic solvents are employed.

**5.** A colour photographic recording material according to claim 1, wherein the compounds of the formula I or II are liquid.

**6.** A compound of the formula Ia or IIa

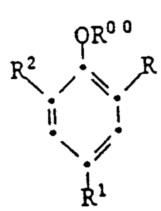

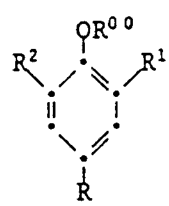

(Ia) (IIa)

in which $R^{00}$ is hydrogen, $-CO-R^5$, $-SO_2-R^6$, $-COOR^3$, $-CO-COOR^3$, $-Si(R^7)(R^8)(R^9)$ or a group of the formula VII, VIII or IX

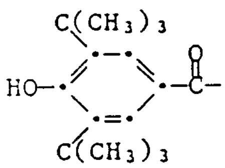 , 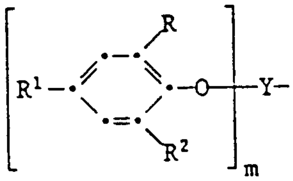 or 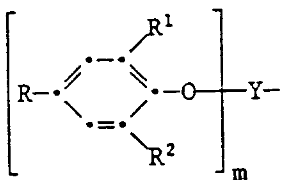

(VII) (VIII) (IX)

in which m is the number 1 or 2 and Y is

$>Si(R^7)(R^8)$ if m is 1 and is

$>P-$ if m is 2,

but in which, in the event that $R^{00}$ = H, R is a group of the formula

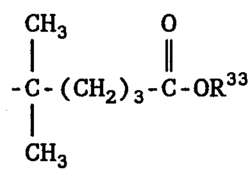

in which $R^{33}$ is a group of the formulae Va or VIa

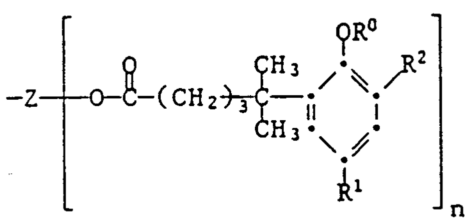

(Va)

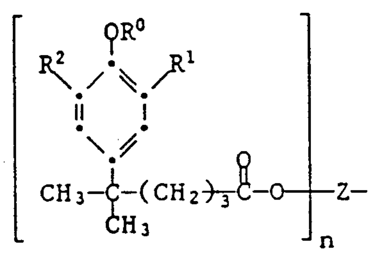

(VIa)

in which n is the number 3, Z is the group

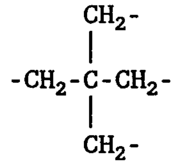

and $R^0$ is hydrogen, $-CO-R^5$, $-SO_2-R^6$, $-COOR^3$, $-CO-COOR^3$, $-Si(R^7)(R^8)(R^9)$ or a group of the formula VII, VIII or IX

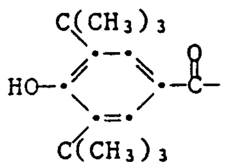 , 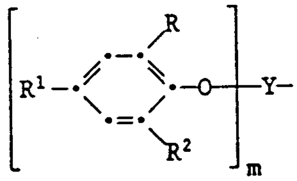 or 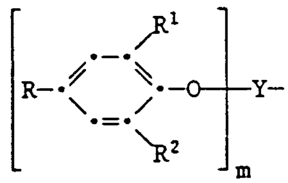

(VII) (VIII) (IX)

in which m is the number 1 or 2 and Y is

$>Si(R^7)(R^8)$ if m is 1 and is

$>P-$ if m is 2,

R is a group of the formula III or IV

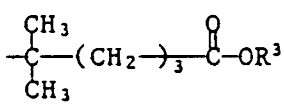

(III)

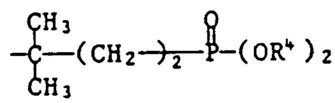

(IV)

$R^1$ is hydrogen, $C_1$-$C_8$alkyl, cyclohexyl, phenyl-$C_1$-$C_4$alkyl or a group of the formula III or IV, and $R^2$ is as defined for $R^1$, subject to the condition that $R^1$ and $R^2$ cannot simultaneously be hydrogen in the formula II, or $R^2$ is a group of the formula

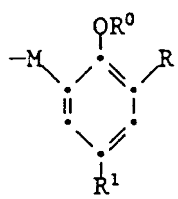 or 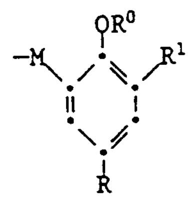

in which M is a direct bond, $-CH_2-$ or -S-, $R^3$ is $C_1$-$C_{20}$alkyl which is unsubstituted or substituted by -OH, $-OCOR^5$ or $-OR^5$ and/or which can be interrupted by one or more O atoms, $C_2$-$C_{18}$alkenyl, $C_5$-$C_{12}$cycloalkyl, a phenyl or naphthyl group which is unsubstituted or substituted by one or two alkyl groups, or is phenyl-$C_1$-$C_4$alkyl, a radical ⊗- or ⊗-$CH_2$- in which ⊗- is a 5-membered or 6-membered heterocyclic structure which contains O and which is unsubstituted or substituted by one or two $C_1$-$C_4$alkyl groups, or is a group of the formula V or VI

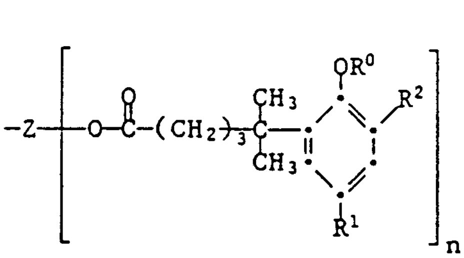

(V)

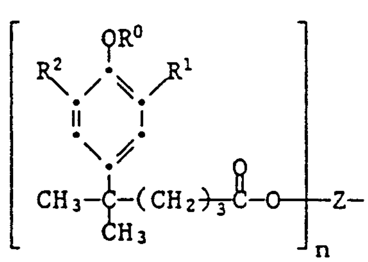

(VI)

in which n is a number from 1 to 3 and Z is a $C_2$-$C_{18}$alkyl radical which has 2 to 4 valencies and can be interrupted by one or more O and/or S atoms, $R^4$ is $C_1$-$C_{12}$alkyl, $R^5$ is $C_1$-$C_{20}$alkyl, $C_2$-$C_{18}$alkenyl, $C_5$-$C_{12}$cycloalkyl, a phenyl or naphthyl group which is unsubstituted or substituted by one or two alkyl groups, or is phenyl-$C_1$-$C_4$alkyl, $R^6$ is $C_1$-$C_4$alkyl, phenyl or tolyl and $R^7$, $R^8$ and $R^9$ independently of one another are $C_1$-$C_4$alkyl, phenyl or benzyl.

7. A compound according to claim 6, wherein $R^{00}$ in the formula Ia or IIa is -CO-$R^5$, -CO-$COOR^3$, -Si($R^7$)-($R^8$)($R^9$) or a group of the formula VII, VIII or IX.

8. A compound according to claim 7, wherein $R^{00}$ is a group of the formula VII

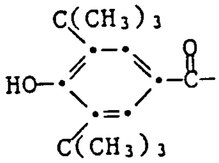

(VII)

9. The use of compounds of the formula Ia or IIa according to claim 6 as stabilizers in colour photographic recording materials.

**Revendications**

1. Matériau d'enregistrement chromophotographique contenant au moins un copulateur de bleu-vert, de pourpre ou de jaune, avec un stabilisant phénolique, matériau caractérisé en ce qu'il contient comme stabilisant de 20 à 1000 mg/$m^2$ d'au moins un composé de formule I ou II ci-dessous :

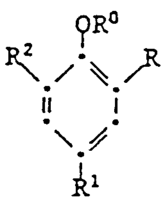

(I)

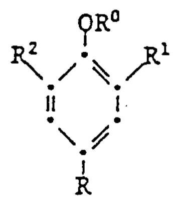

(II)

formules dans lesquelles :

R représente un groupe de formule III ou IV :

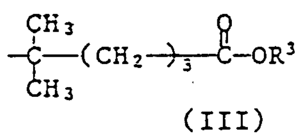

(III)

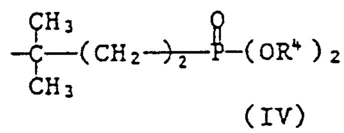

(IV)

$R^1$ l'hydrogène, un alkyle en $C_1$-$C_8$, un cyclohexyle, un phényl-$C_1$-$C_8$-alkyle ou un groupe de formule III ou IV, et

$R^2$ a l'une des significations que l'on vient d'indiquer pour $R^1$, avec la condition que dans la formule II $R^1$ et $R^2$ ne soient pas tous deux l'hydrogène,

ou bien $R^2$ désigne un groupe de formule :

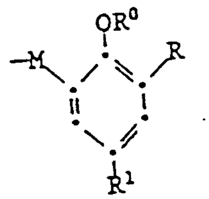

ou

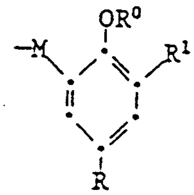

M représentant une liaison directe ou bien le groupe $-CH_2-$ ou -S-,

$R^3$ est un groupe de formule V ou VI ci-dessous :

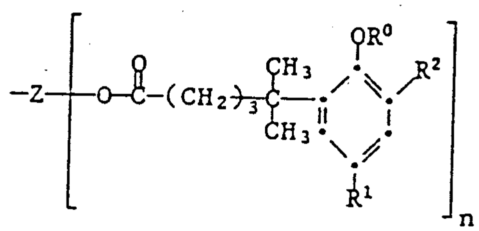

(V)

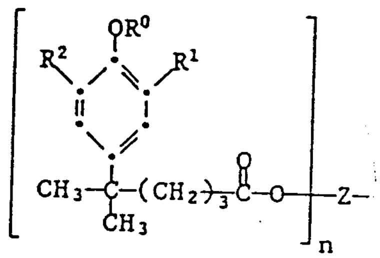

(VI)

n étant un nombre de 1 à 3 et Z un alkyle en $C_2$-$C_{18}$ divalent, trivalent ou tétravalent et le cas échéant interrompu par un ou plusieurs atomes d'oxygène et/ou de soufre,

$R^4$ est un alkyle en $C_1$-$C_{12}$,

$R^0$ un groupe $-CO-R^5-$, $-SO_2-R^6-$, $-COOR^3-$, $-CO-COOR^3$, $-Si(R^7)(R^8)(R^9)$ ou de formule VII, VIII ou IX :

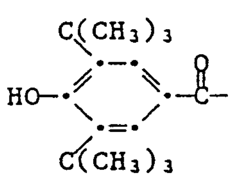

,

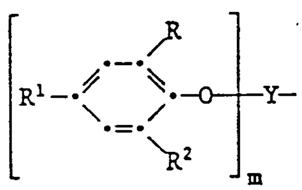

oder

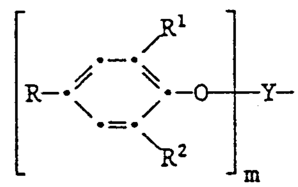

(VII) (VIII) (IX)

ou bien l'hydrogène si n est le nombre 3 dans les formules V et VI, m étant le nombre 1 ou 2 et

Y, si m = 1, un groupe $>Si(R^7)(R^8)$, et

si m = 2, $>P-$

$R^5$ représentant un alkyle en $C_1$-$C_{20}$, un alcényle en $C_2$-$C_{18}$, un cycloalkyle en $C_5$-$C_{12}$, un phényle ou un naphtyle avec éventuellement un ou deux alkyles comme substituants ou encore un phényl-$C_1$-$C_4$-alkyle,

$R^6$ un alkyle en $C_1$-$C_4$ ou le groupe phényle ou tolyle, et

$R^7$, $R^8$ et $R^9$ désignant chacun, indépendamment les uns des autres, un alkyle en $C_1$-$C_4$ ou le groupe phényle ou benzyle.

2. Matériau d'enregistrement selon la revendication 1, caractérisé en ce qu'il contient un stabilisant dans lequel $R^0$ est un groupe $-COR^5$, $-CO-COOR^3$, $-Si(R^7)(R^8)(R^9)$ ou un groupe de formule VII, VIII ou IX.

3. Matériau d'enregistrement selon la revendication 2, caractérisé en ce qu'il contient un stabilisant dans lequel $R^0$ est un groupe de formule VII :

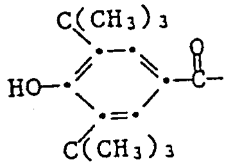

(VII)

4. Matériau d'enregistrement selon la revendication 1, caractérisé en ce que l'on utilise pour ce matériau des composés de formule I ou II qui sont liquides ou facilement solubles dans des solvants pour la photographie.

5. Matériau d'enregistrement selon la revendication 1 dans lequel les composés de formule I ou II sont des composés liquides.

6. Les composés de formule Ia ou II a:

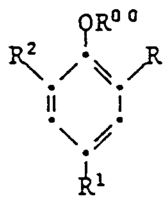

(Ia)

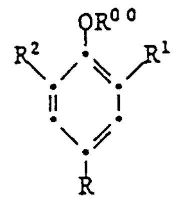

(IIa)

dans lesquelles

$R^{00}$ désigne l'hydrogène, un groupe $-CO-R^5$, $-SO_2-R^6-$, $-COOR^{3'}$ $-CO-COOR^3$, $-Si(R^7)(R^8)(R^9)$ ou un groupe de formule VII, VIII ou IX :

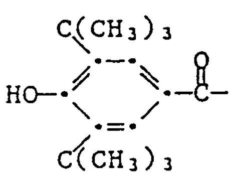

(VII)

,

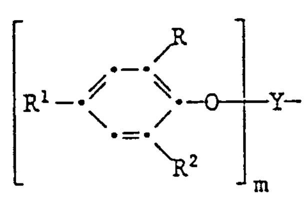

(VIII)

oder

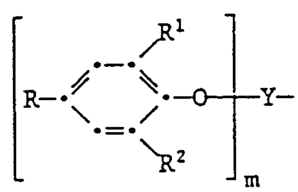

(IX)

m étant le nombre 1 ou 2 et

Y, si m = 1, un groupe >Si($R^7$)($R^8$), et

si m = 2, >P,-

mais si $R^{00}$ est l'hydrogène R sera un groupe

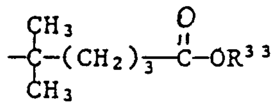

$R^{33}$ désignant un groupe de formule Va ou VIa :

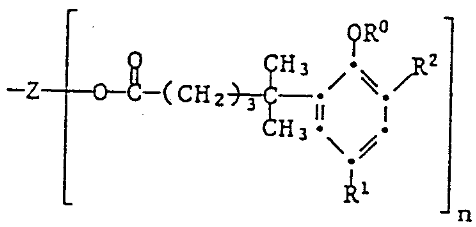

(Va)

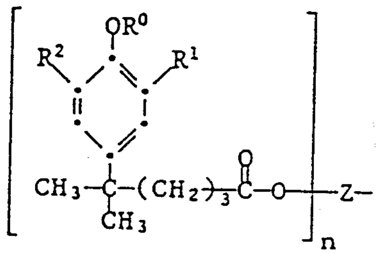

(VIa)

dans lesquelles

n est le nombre 3,

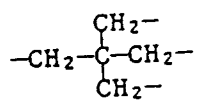

Z le groupe et

Ro l'hydrogène, un groupe $-CO-R^5$, $-SO_2-R^6-$, $-COOR^3$, $-CO-COOR^3$ ou $-Si(R^7)(R^8)(R^9)$ ou un groupe de formule VII, VIII ou IX :

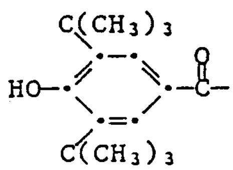

,

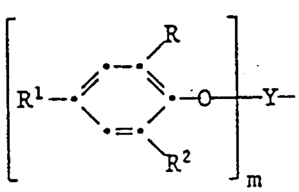

oder

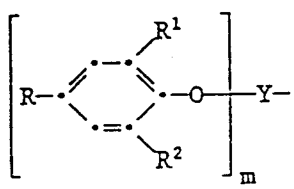

(VII) (VIII) (IX)

m étant le nombre 1 ou 2 et

Y, si m = 1, un groupe $>Si(R^7)(R^8)$, et

si m = 2, $>P-$

R représente un groupe de formule III ou IV

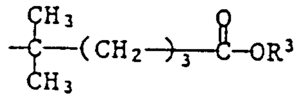
(III)

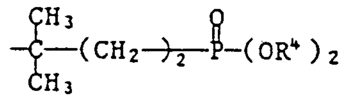
(IV)

$R^1$ l'hydrogène, un alkyle en $C_1$-$C_8$, un cyclohexyle, un phényl-$C_1$-$C_4$-alkyle ou encore un groupe de formule III ou IV, et

$R^2$ a l'une des significations qui ont été données pour $R^1$, avec la condition que dans la formule II $R^1$ et $R^2$ ne soient pas tous les deux l'hydrogène, ou bien $R^2$ est un groupe de formule :

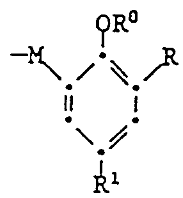
ou
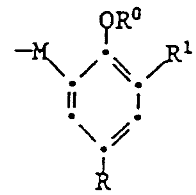

M désignant une liaison directe ou le groupe $-CH_2-$ ou -S-,

$R^3$ représente un alkyle en $C_1$-$C_{20}$, éventuellement substitué par un groupe -OH, $-OCOR^5$ ou $-OR^5$ et/ou éventuellement interrompu par un ou plusieurs atomes d'oxygène, un alcényle en $C_2$-$C_{18}$, un cycloalkyle en $C_5$-$C_{12}$, un phényle ou un naphtyle avec éventuellement un ou deux alkyles comme substituants ou encore un phényl-$C_1$-$C_4$-alkyle, ou un radical ⊗, ou ⊗$-CH_2-$, X désignant un hétérocycle pentagonal ou hexagonal comprenant de l'oxygène, ayant éventuellement un ou deux alkyles en $C_1$-$C_4$ comme substituants, ou bien un groupe de formule V ou VI :

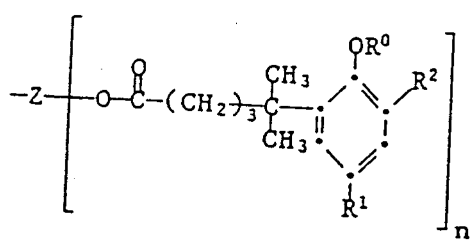
(V)

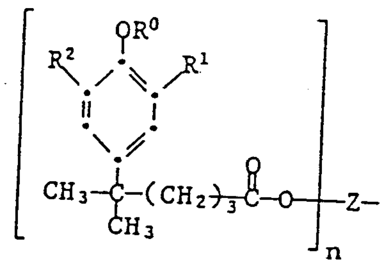
(VI)

n étant un nombre de 1 à 3 et Z un alkyle en $C_2$-$C_{18}$ divalent, trivalent ou tétravalent et le cas échéant interrompu par un ou plusieurs atomes d'oxygène et/ou de soufre,

$R^4$ représente un alkyle en $C_1$-$C_{12}$,

$R^5$ un alkyle en $C_1$-$C_{20}$, un alcényle en $C_2$-$C_{18}$, un cycloalkyle en $C_5$-$C_{12}$, un phényle ou un naphtyle avec éventuellement un ou deux alkyles comme substituants ou un phényl-$C_1$-$C_4$-alkyle,

$R^6$ un alkyle en $C_1$-$C_4$, un phényle ou un tolyle, et

$R^7$, $R^8$ et $R^9$ représentent chacun, indépendamment les uns des autres, un alkyle en $C_1$-$C_4$ ou le groupe phényle ou benzyle.

**7.** Composés selon la revendication 6 dans lesquels $R^{00}$, dans la formule Ia ou IIa, est un groupe $-COR^5$, $-CO-COOR^3$, $-Si(R^7)(R^8)(R^9)$ ou un groupe de formule VII, VIII ou IX.

**8.** Composés selon la revendication 7 dans lesquels $R^{00}$ est le groupe de formule VII :

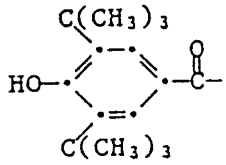

(VII)

**9.** L'emploi de composés de formule Ia ou IIa selon la revendication 6 comme stabilisants dans des matériaux d'enregistrement chromophotographique.